# EUROPÄISCHE PATENTSCHRIFT

(11) **EP 0 648 813 B1**
(45) Veröffentlichungstag und Bekanntmachung des Hinweises auf die Patenterteilung: **28.04.1999**
(21) Anmeldenummer: 94115470.0
(22) Anmeldetag: 30.09.1994
(51) Int. Cl.: C09B 23/02, C09B 23/04, C09B 23/06, G03C 1/14, G03C 1/16, G03C 1/18

(54) **Fotografisches Aufzeichnungsmaterial**
Photographic recording material
Matériau d'enregistrement photographique

(30) Priorität: 13.10.1993 DE 4334787; 14.12.1993 DE 4342617
(43) Veröffentlichungstag der Anmeldung: 19.04.1995
(73) Patentinhaber: Agfa-Gevaert AG, 51373 Leverkusen (DE)
(72) Erfinder: Missfeldt, Dr. Michael, D-42799 Leichlingen (DE)

(56) Entgegenhaltungen:
- EP-A- 0 126 990
- EP-A- 0 176 483
- DD-A- 5 308
- DE-B- 1 569 790
- DE-C- 749 494
- DE-C- 892 965
- GB-A- 1 137 084
- GB-A- 1 402 881
- GB-A- 1 494 740
- GB-A- 1 596 836
- SU-A- 1 560 537

## Beschreibung

Die Erfindung betrifft ein fotografisches Aufzeichnungsmaterial mit wenigstens einer Silberhalogenidemulsionsschicht, deren Silberhalogenidemulsion mit wenigstens einem Spektralsensibilisator der Cyaninreihe, der mindestens eine Phenanthroazol- oder Anthraazolgruppe enthält.

Cyaninfarbstoffe mit Azolidinen als Donor- bzw. Akzeptorgruppen sind als spektrale Sensibilisatoren bekannt. Anellierte Verbindungen dieser Gruppe führen im allgemeinen zu guten Empfindlichkeiten der Silberhalogenidemulsionen, beispielsweise Benzoxazolcyanine und Naphthoxazolcyanine. Aus der GB 1 137 084 sind verschiedene Cyaninfarbstoffe enthaltend Naphthoazolgruppen, wie beispielsweise Naphthothiazole, Naphthooxazole und Naphthopyrrole, bekannt.

Von den Cyaninfarbstoffen mit drei anellierten Benzolringen sind bisher einige wenige kationische Anthrathiazoltrimethine (I.I. Levkoev, V.V. Durmshkina, J. Gen. Chem. (USSR), 15, 215-224 (1945); CA 2989/3 (1946)), bekannt geworden, die aber den Benzthiazol- und Naphththiazolcyanin in ihrer sensibilisierenden Wirkung unterlegen sind.

Es wurde jetzt überraschend gefunden, daß Phenanthroazol- und Anthraazolcyanine mit wenigstens einer Sulfoalkylgruppe ausgezeichnete Spektralsensibilisatoren sind.

Gegenstand der Erfindung ist daher ein fotografisches Aufzeichnungsmaterial mit mindestens einer lichtempfindlichen Silberhalogenidemulsionsschicht, dessen Silberhalogenid mit einem Cyaninfarbstoff der allgemeinen Formel I spektral sensibilisiert ist, 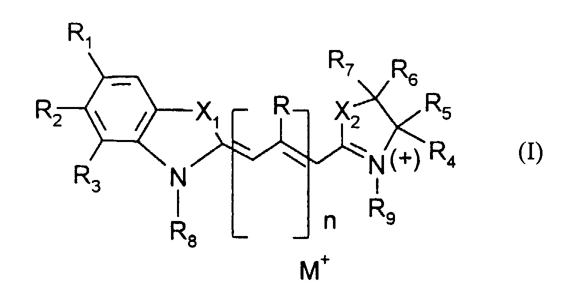 worin bedeuten:
- X₁ und X₂: O, S, Se oder NR₁₀;
- R₁ und R₂ oder R₂ und R₃: die restlichen Glieder eines gegebenenfalls substituierten Phenanthroazols oder Anthraazols und deren verbleibender Rest R₃ oder R₁ Wasserstoff;
- R₄ und R₆: Wasserstoff oder zusammen eine π-Bindung,
- R₅ und R₇: Wasserstoff, Alkyl oder Aryl oder
- R₄, R₅, R₆ und R₇: die restlichen Glieder eines gegebenenfalls substituierten Benzazols, Naphthazols, Phenanthroazols oder Anthraazols;
- R₈, R₉: Alkyl, Sulfoalkyl, Carboxyalkyl, -(CH₂)ₘ-CO-NR₁₁-SO₂-R₁₂ oder -(CH₂)ₘ-SO₂-NR₁₁-CO-R₁₂;
- R₁₀: Alkyl, Sulfoalkyl, Carboxyalkyl oder Aryl,
- R₁₁: Wasserstoff oder die beim Entfernen eines Protons zurückbleibende negative Ladung (⊖);
- R₁₂: Alkyl, Aryl, -O^{⊖}, -N(R₁₃)₂;
- R₁₃: Wasserstoff, Alkyl oder Aryl (gleich oder verschieden);
- R: Wasserstoff, C₁-C₄-Alkyl, C₁-C₄-Alkylthio oder Phenyl;
- m: eine ganze Zahl von 1 bis 10;
- n: 0 oder 1; und
- M⁺: ein gegebenenfalls zum Ladungsausgleich erforderliches Kation,
mit der Maßgabe, daß der Cyaninfarbstoff der Formel I wenigstens eine Sulfoalkylgruppe, eine Carboxyalkylgruppe, eine Gruppe -(CH₂)ₘ-CO-NR₁₁-SO₂-R₁₂ oder eine Gruppe -(CH₂)ₘ-SO₂NR₁₁-CO-R₁₂ aufweist.

Eine durch R₈, R₉ oder R₁₀ dargestellte Sulfoalkylgruppe kann gegebenenfalls substituiert sein, z.B. durch -OH.

Geeignete Beispiele erfindungsgemäßer Sensibilisierungsfarbstoffe der allgemeinen Formel I können sein:
- FS 1: X₁ = X₂ = O, R₁ = H, R₈ = R₉ = Sulfopropyl, R = Ethyl, n = 1, M⁺ = K⁺, 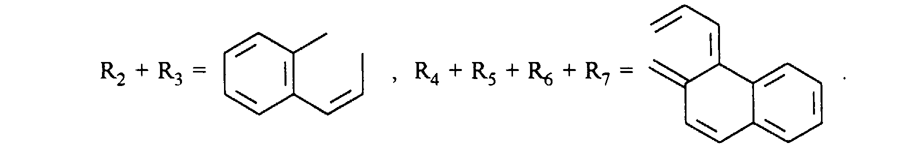
- FS 2: X₁ = O, X₂ = S, R₁ = H, R₈ = R₉ = Sulfopropyl, R = Ethyl, n = 1, M⁺ = Na⁺, 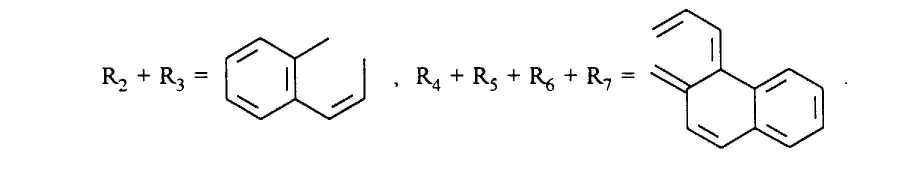
- FS 3: X₁ = O, X₂ = S, R₁ = H, R₈ = R₉ = Sulfopropyl, R = Ethyl, n = 1, M⁺ = Na⁺, 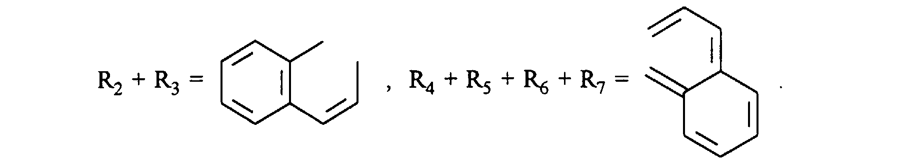
- FS 4: X₁ = O, X₂ = S, R₁ = H, R₈ = R₉ = Sulfopropyl, R = Ethyl, n = 1, M⁺ = Na⁺, 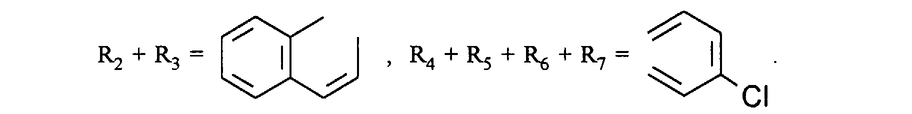
- FS 5: X₁ = O, X₂ = NEthyl, R₁ = H, R₈ = R₉ = Sulfopropyl, R = H, n = 1, M⁺ = Ethyl₃N⁺H, 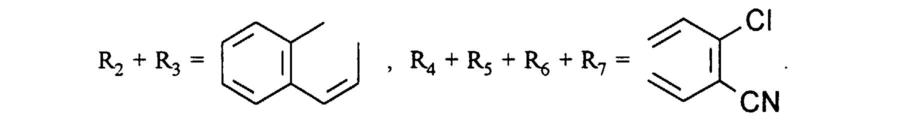
- FS 6: X₁ = O, X₂ = NEthyl, R₁ = H, R₈ = R₉ = Sulfopropyl, R = H, n = 1, M⁺ = Ethyl₃N⁺H, 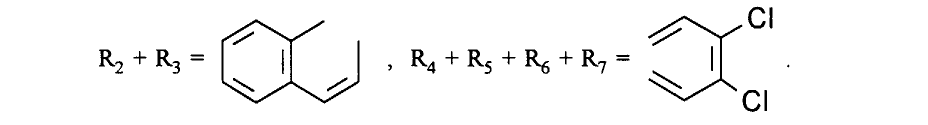
- FS 7: X₁ = O, X₂ = NEthyl, R₁ = H, R₈ = R₉ = Sulfopropyl, R = H, n = 1 M⁺ = Ethyl₃N⁺H, 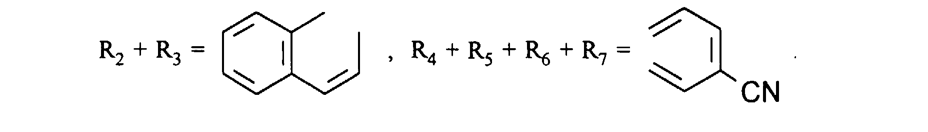
- FS 8: X₁ = O, X₂ = S, R₁ = H, R₄ = R₅ = R₆ = R₇ = H, R₈ = R₉ = Sulfopropyl, R = Ethyl, n = 1, M⁺ = Ethyl₃N⁺H, 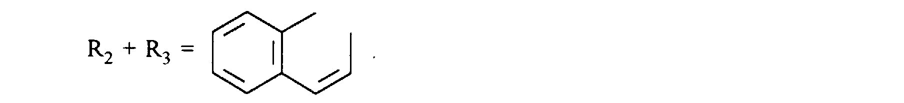
- FS 9: X₁ = X₂ = O, R₁ = H, R₈ = Sulfopropyl, R₉ = Ethyl, R = Ethyl, n = 1, M⁺ = Ethyl₃N⁺H, 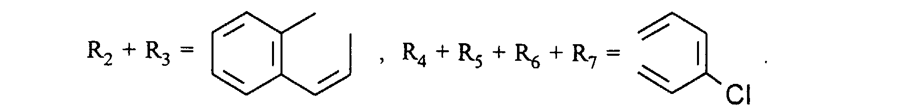
- FS 10: X₁ = X₂ = O, R₁ = H, R₈ = R₉ = Sulfopropyl, R = Ethyl, n = 1, M⁺ = Ethyl₃N⁺H, 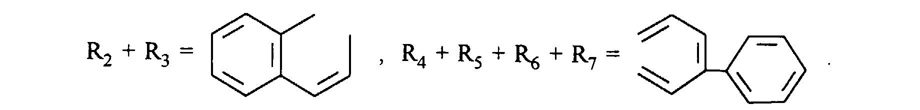
- FS 11: X₁ = X₂ = O, R₁ = H, R₈ = R₉ Sulfopropyl, R= = Ethyl, n = 1, M⁺ = K⁺, 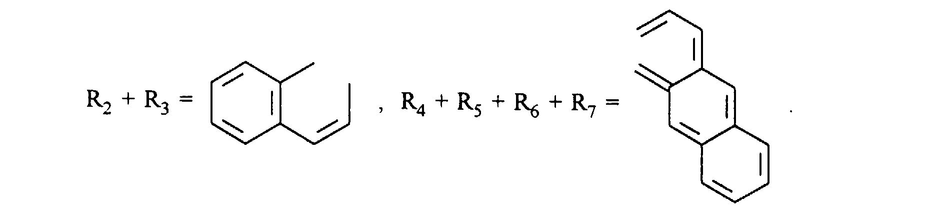
- FS 12: X₁ = X₂ = O, R₁ = H, R₈ = R₉ = Sulfopropyl, R = Ethyl, n = 1, M⁺ = K⁺, 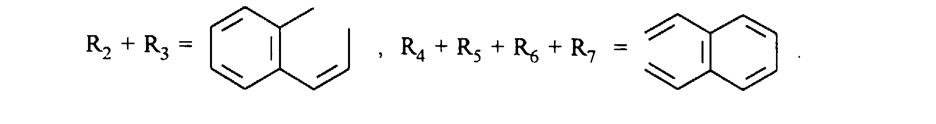
- FS 13: X₁ = X₂ = O, R₁ = H, R₈ = R₉ = Sulfopropyl, R = Ethyl, n = 1, M⁺ = K⁺, 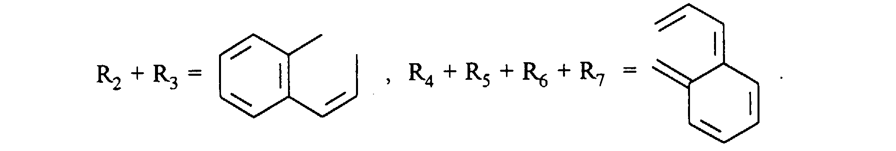
- FS 14: X₁ = S, X₂ = O, R₁ = H, R₈ = R₉ = Sulfopropyl, R = Ethyl, n = 1, M⁺ = Na⁺, 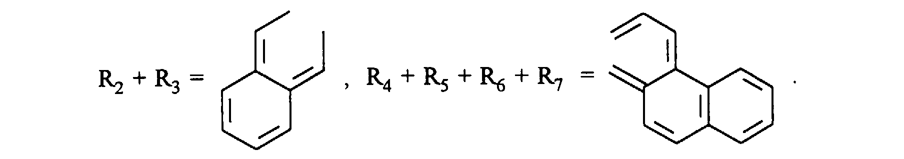
- FS 15: X₁ = S, X₂ = O, R₁ = H, R₈ = Sulfopropyl, R₉ = R = Ethyl, n = 1, 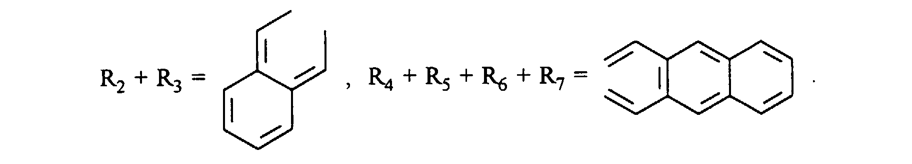
- FS 16: X₁ = S, X₂ = O, R₁ = H, R₈ = R₉ = Sulfopropyl, R = Ethyl, n = 1, M⁺ = Na⁺, 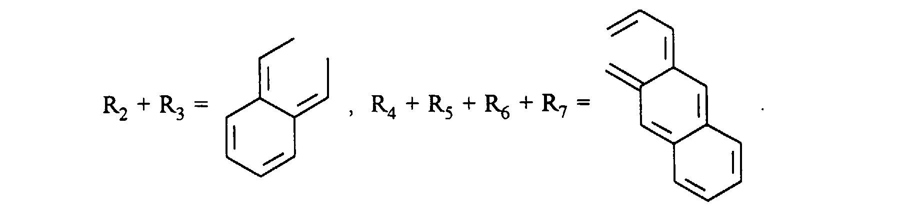
- FS 17: X₁ = S, X₂ = O, R₁ = H, R₈ = Sulfopropyl, R₉ = R = Ethyl, n = 1, 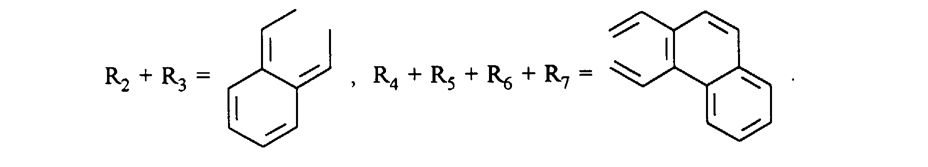
- FS 18: X₁ = X₂ = S, R₁ = H, R₈ = R₉ = Sulfopropyl, R = Ethyl, n = 1, M⁺ = Ethyl₃N⁺H, 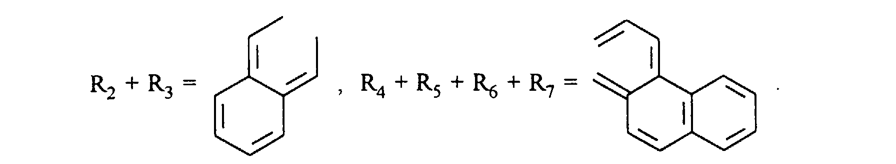
- FS 19: X₁ = S, X₂ = NEthyl, R₈ = R₉ = Sulfopropyl, R₁ = R = H, n = 1, M⁺ = Ethyl₃N⁺H, 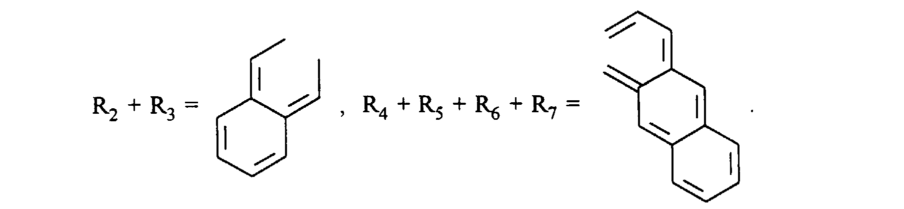
- FS 20: X₁ = X₂ = S, R₁ = H, R₈ = R₉ = Sulfopropyl, R = Ethyl, n = 1, M⁺ = Ethyl₃N⁺H, 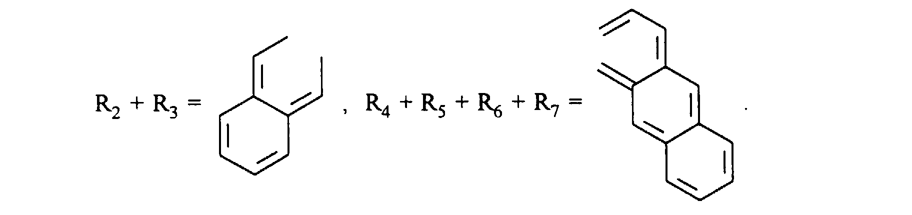
- FS 21: X₁ = X₂ = S, R₁ = H, R₈ = R₉ = Sulfopropyl, R = Ethyl, n = 1, M⁺ = Ethyl₃N⁺H, 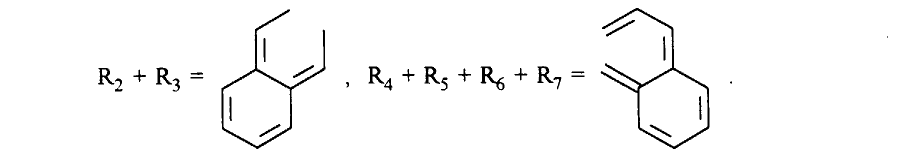
- FS 22: X₁ = X₂ = S, R₁ = H, R₈ = R₉ = Sulfopropyl, R = Ethyl, n = 1, M⁺=Ethyl₃N⁺H, 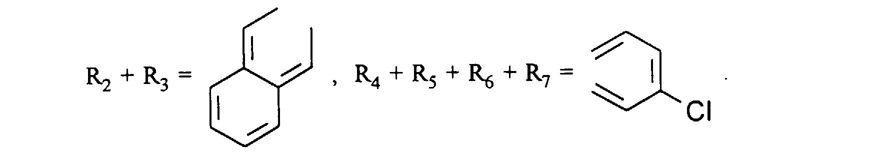
- FS 23: X₁ = S, X₂ = O, R₁ = H, R₈ = R₉ = Sulfopropyl, R = Ethyl, n = 1, M⁺ = Na^{⊕} 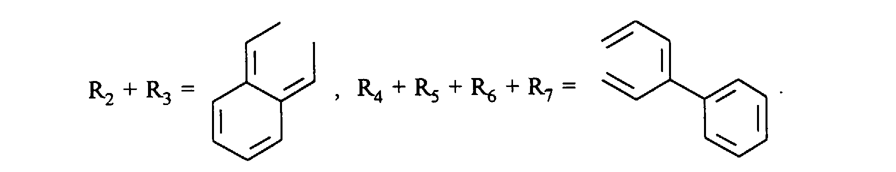
- FS 24: X₁ = S, X₂ = O, R₁ = H, R₈ = R₉ = Sulfopropyl, R = Ethyl, n = 1, M⁺ = Na⁺, 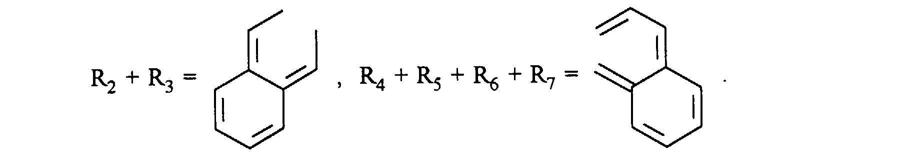
- FS 25: X₁ = S, X₂ = NEthyl, R = R₁ = H, R₈ = Sulfopropyl, R₉ = Sulfobutyl, n = 1, M⁺ = Ethyl₃N⁺H, 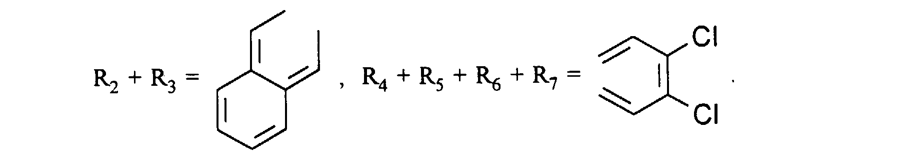
- FS 26: X₁ = S , X₂ = NEthyl, R = R ₁ = H, R ₈ = Sulfopropyl, R₉ = 3-Methyl-sulfopropyl, n = 1 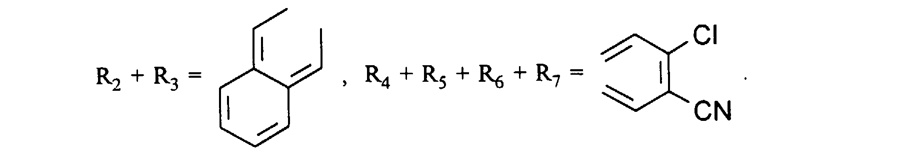
- FS 27: X₁ = X₂ = O, R₃ = H, R₈ = R₉ = Sulfopropyl, R = Ethyl, n = 1, M⁺ = Ethyl₃N⁺H, 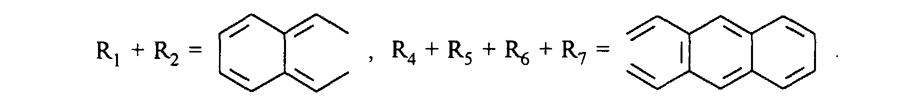
- FS 28: X₁ = X₂ = O, R₃ = H, R₈ = Sulfopropyl, R₉ = Ethyl, R = Ethyl, n = 1, 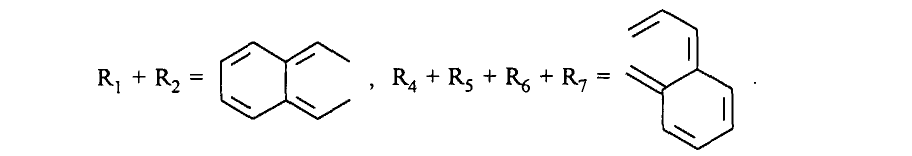
- FS 29: X₁ = O, X₂ = S, R₃ = H, R₈ = R₉ = Sulfopropyl, R = Ethyl, n = 1, M⁺ = Na⁺, 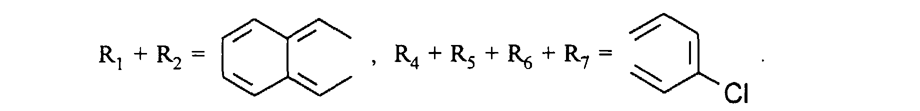
- FS 30: X₁ = X₂ = O, R₃ = H, R₈ = Sulfopropyl, R₉ = Sulfoethyl, R = Ethyl, n = 1, M⁺ = Na⁺, 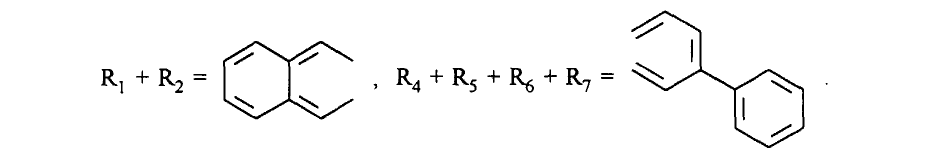
- FS 31: X₁ = O, X₂ = NEthyl, R₃ = H, R₈ = Sulfopropyl, R₉ = Ethyl, R = H, n = 1, 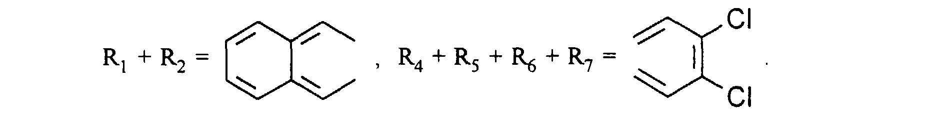
- FS 32: X₁ = X₂ = O, R₁ = H, R₈ = R₉ = Sulfopropyl, R = Ethyl, n = 1, M⁺ = K⁺, 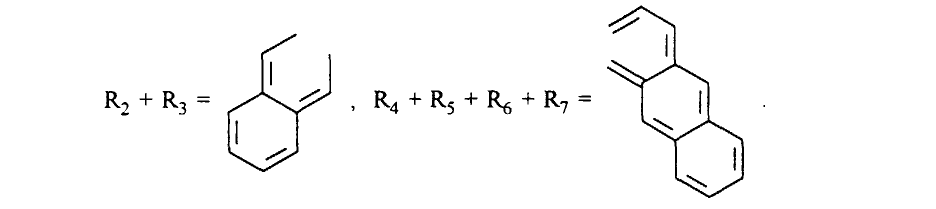
- FS 33: X₁ = X₂ = O, R₁ = H, R₈ = Ethyl, R₉ = Sulfopropyl, R = Ethyl, n = 1, 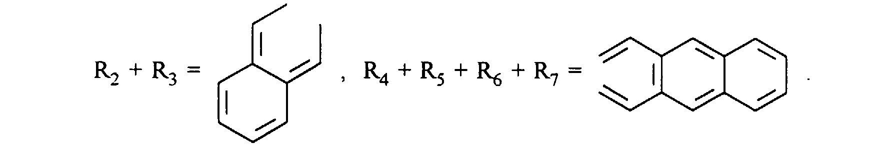
- FS 34: X₁ = O, X₂ = S, R₁ = H, R₈ = Sulfopropyl, R₉ = Sulfobutyl, R = Ethyl, n = 1, M⁺ = Na⁺, 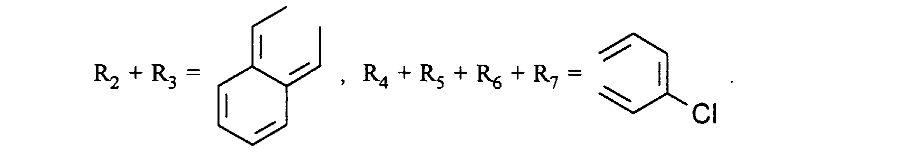
- FS 35: X₁ = O, X₂ = S, R₁ = H, R₈ = R₉ = Sulfopropyl, R = Ethyl, n =1, M⁺ = Na⁺, 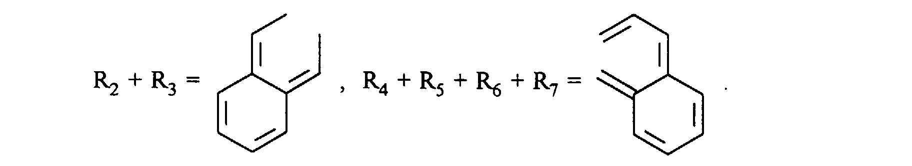
- FS 36: X₁ = O, X₂ = NEthyl, R₁ = H, R₈ = Sulfopropyl, R₉ = Sulfobutyl, R = H, n = 1, M⁺ = Na⁺, 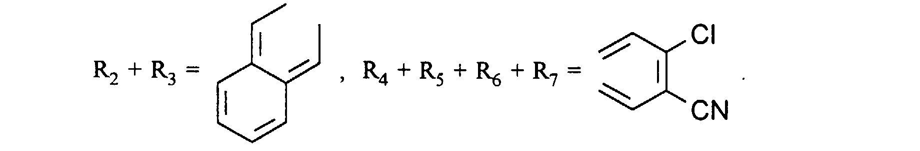
- FS 37: X₁ = X₂ = O, R₁ = H, R₅ + R₇ = Phenyl, R₄ + R₆ = π-Bindung, R₈ = Sulfopropyl, R₉ = Ethyl, R = Methyl, n = 1, 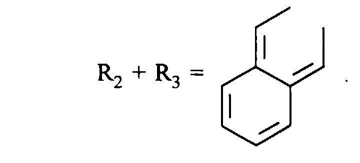
- FS 38: X₁ = S, X₂ = O, R₁ = H, R₈ = Ethyl, R₉ = Sulfopropyl, n = 1, R = Ethyl, 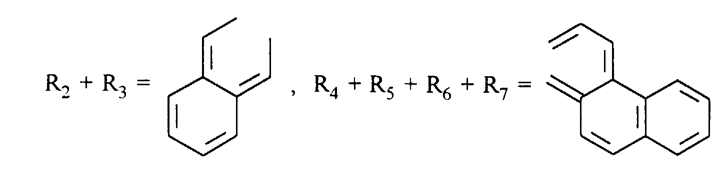
- FS 39: X₁ = S, X₂ = NEthyl, R₁ = H, R₈ = Ethyl, R₉ = Sulfopropyl, R = H, n = 1, 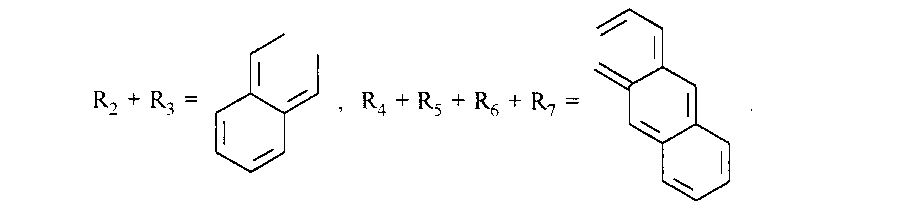
- FS 40: X₁ = O, X₂ = S, R₁ = H, R₈ = Ethyl, R₉ = Sulfopropyl, n = 1, R = Ethyl, 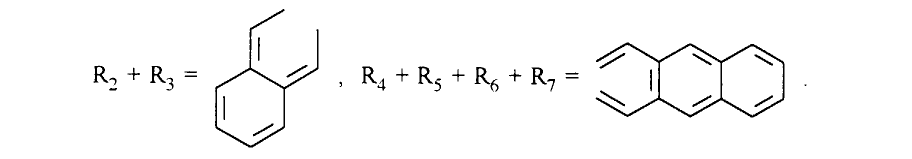
- FS 41: X₁ = X₂ = S, R₁ = H, R₈ = Ethyl, R₉ = Sulfopropyl, n = 1, R = Ethyl, 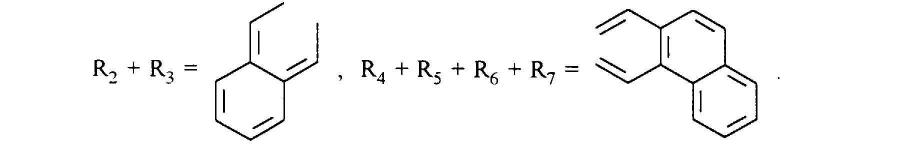
- FS 42: X₁ = O, X₂ = S, R₁ = H, R₈ = Ethyl, R₉ = Sulfopropyl, n = 1, R = Ethyl, 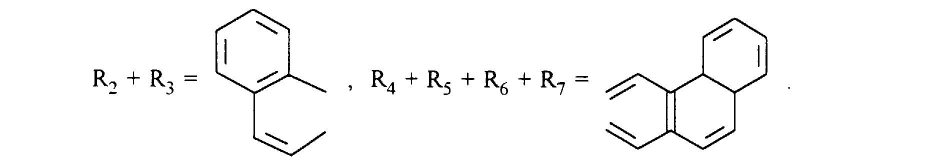
- FS 43: X₁ = O, X₂ = NEthyl, R₁ = H, R₈ = Ethyl, R₉ = Sulfopropyl, n =1, R= H, 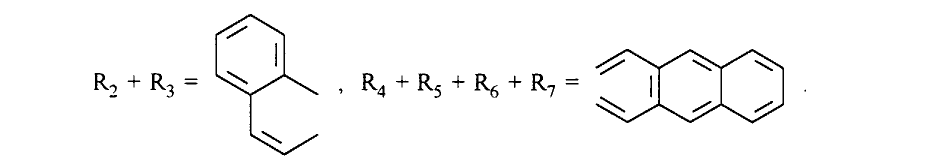
- FS 44: X₁ = O, X₂ = S, R₁ = H, R₈ = R₉ = Sulfopropyl, n = O, M⁺ = Ethyl₃N⁺H, 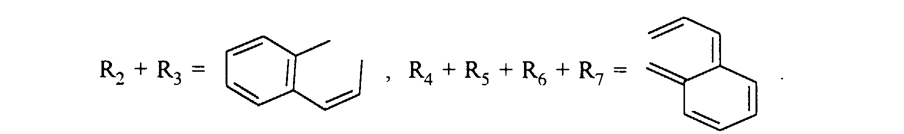
- FS 45: X₁ = O, X₂ = S, R₁ = H, R₈ = R₉ = Sulfopropyl, n = O, M⁺ = Ethyl₃N⁺H, 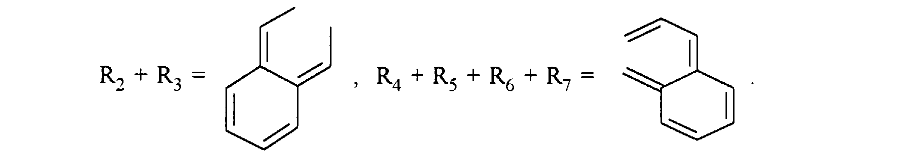
- FS 46: X₁ = O, X₂ = S, R₃ = H, R₈ = Ethyl, R₉ = Sufopropyl n = 0, 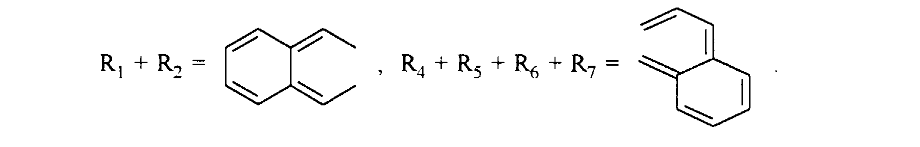
- FS 47: X₁ = N-Methyl, X₂ = S, R₁ = H, R₈ = Sulfophobutyl, R₉ = Sulfopropyl, n = O, M⁺ = K⁺, 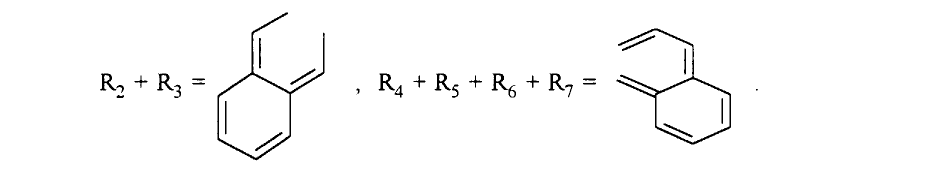
- FS 48: X₁ = X₂ = S, R₁ = H, R₈ = Sulfopropyl, R₉ = Sulfobutyl, n O, M⁺ = Ethyl₃N⁺H, 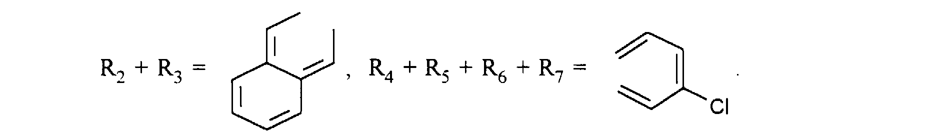
- FS 49: X₁ = S, X₂ = O, R₁ = H, R₈ = Sulfopropyl, R₉ = Sulfoethyl, n = 0, M⁺ = Ethyl₃N⁺H, 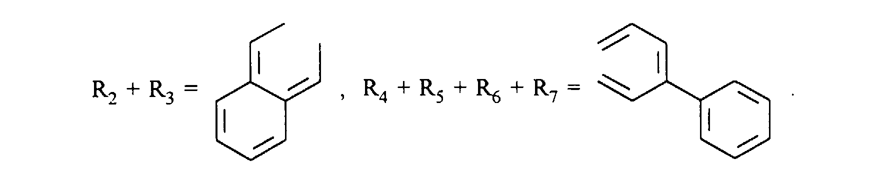
- FS 50: X₁ = X₂ = S, R₁ = H, R₈ = Sulfopropyl, R₉ = 3-Methylsulfopropyl, n = 0, M⁺ = Ethyl₃N⁺H, 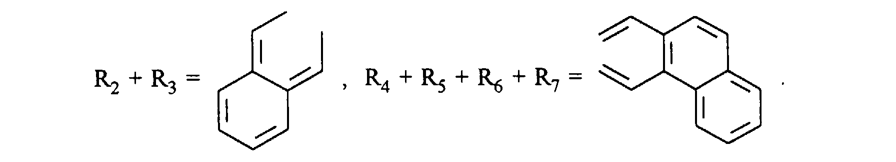
- FS 51: X₁ = S, X₂ = O, R₁ = H, R₈ = Sulfopropyl, R₉ = Ethyl, n = 0, 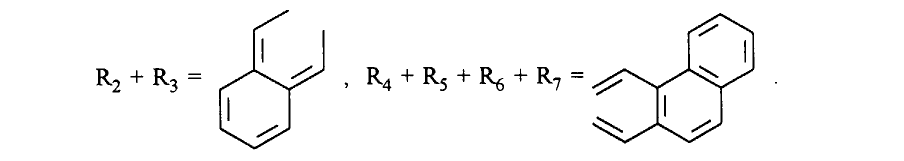
- FS 52: X₁ = S, X₂ = NEthyl, R₁ = H, R₈ = Sulfopropyl, R₉ = Ethyl, n = 0, 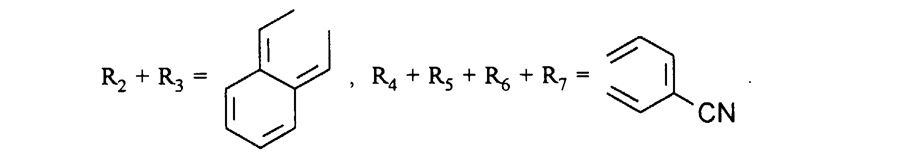
- FS 53: X₁ = X₂ = O, R₁ = H, R₈ = R₉ = Sulfopropyl, n = 0, M⁺ = Na⁺, 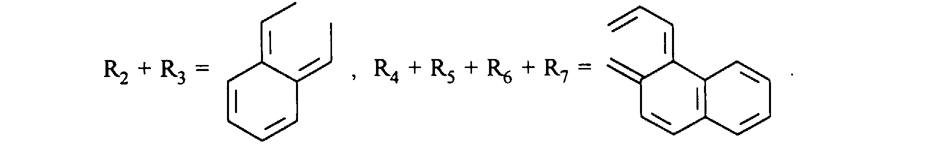
- FS 54: X₁ = X₂ = O, R₁ = H, R₈ = R₉ = Sulfopropyl, n = 0, M⁺ = Na⁺, 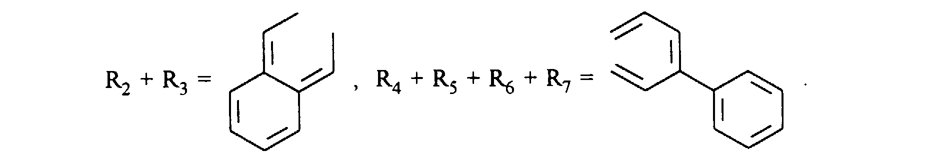
- FS 55: X₁ = O, X₂ = NEthyl, R₁ = H, R₈ = R₉ = Sulfopropyl, n = 0, M⁺ = K⁺, 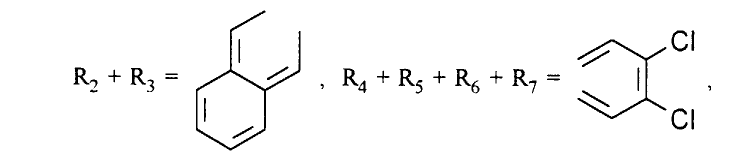
- FS 56: X₁ = O, X₂ = S, R₁ = H, R₈ = -(CH₂)₃SO₂N^{⊖}-COCH₃, R₉ = Sulfopropyl, n = 0, M⁺ = Ethyl₃N⁺H, 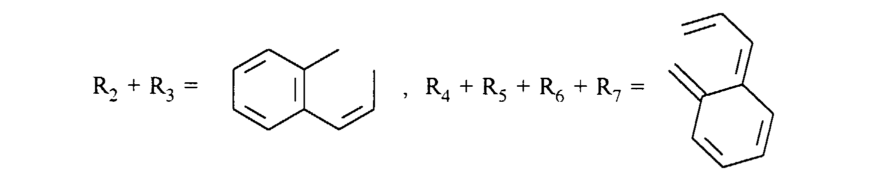
- FS 57: X₁ = O, X₂ = S, R₁ = H, R₈ = Sulfopropyl, R₉ = -(CH₂)₃CON^{⊖} -SO₂CH₃, n = 0, M⁺ = Na⁺, 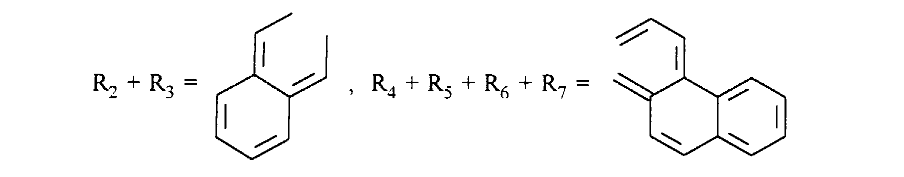
- FS 58: X₁ = O, X₂ = NEthyl, R₁ = H, R₈ = Ethyl, R₉ = -(CH₂)₃SO₂N^{⊖} -COCH₃, n = 1, R = H, 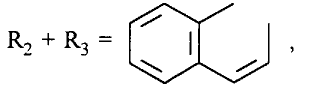 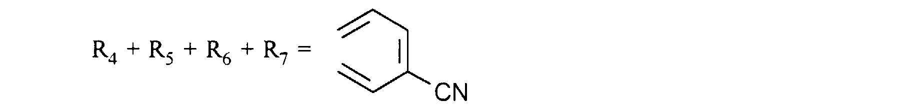
- FS 59: X₁ = X₂ = O, R₃ = H, R₉ = Ethyl, R₈ = -(CH₂)₃SO₂N^{⊖} -COCH₃, n = 1, R = Ethyl, 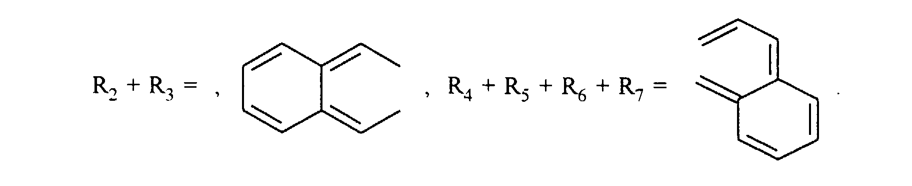
- FS 60: X₁ = O, X₂ = S, R₁ = H, R₈ = -(CH₂)₂CON^{⊖} -SO₂CH₃, R₉ = Sulfopropyl, n = 0 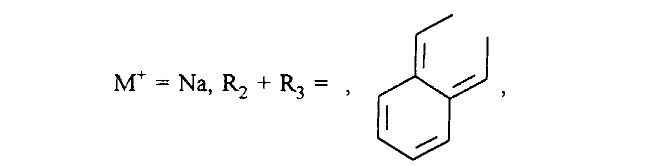 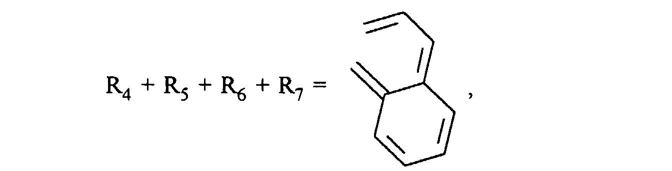
- FS 61: X₁ = X₂ = S, R₁ = H, n = 1, R = Ethyl, R₈ = -(CH₂)₃CON^{⊖}-SO₂CH₃, R₉ = Ethyl,

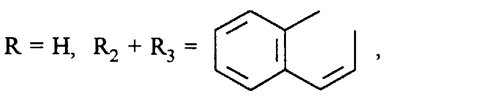

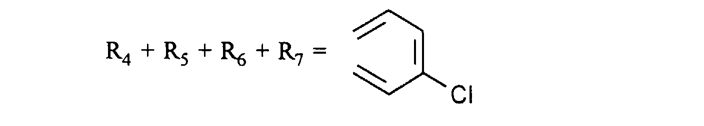

Die zweiwertigen Reste, die durch R₂ und R₃, R₁ und R₂ bzw. R₄, R₅, R₆ und R₇ definiert sind, könnten mit der Formel I immer auf zwei unterschiedliche Weisen verknüpft werden, wodurch in vielen Fällen unterschiedliche Produkte entstünden. Die vorstehende Schreibweise ist so zu verstehen, daß die zweiwertigen Reste in der Darstellungsebene zur Verknüpfung lediglich verschoben, nicht aber umgeklappt werden. Es ist also stets eindeutig, wie das Molekül in jedem Einzelfall strukturiert ist.

Die Synthesen der erfindungsgemäßen Sensibilisierungsfarbstoffe und deren Vorstufen werden nachfolgend beschrieben:

Aus **Schema 1** kann der präparative Zugang zu Trimethinen, welche ein Phenanthrooxazolelement enthalten, entnommen werden:

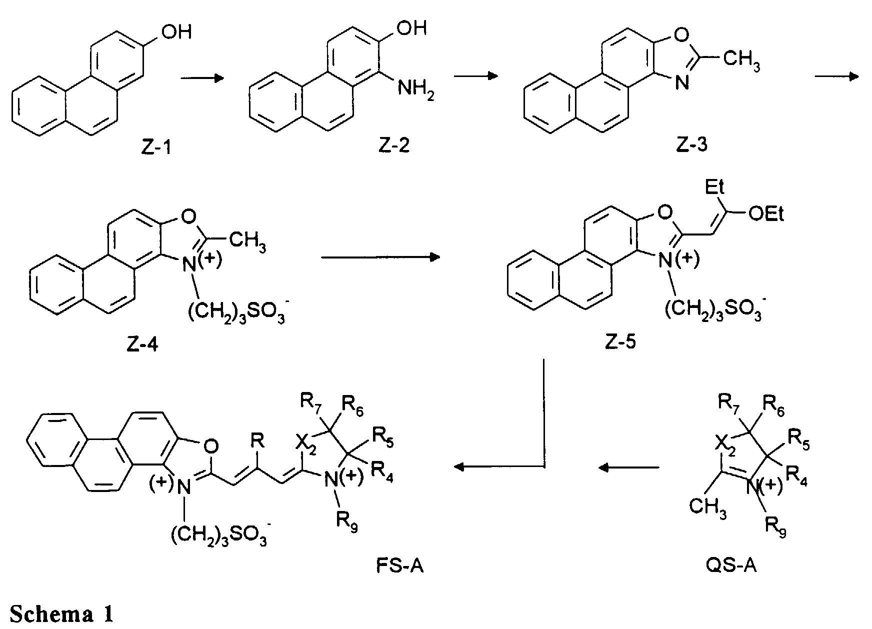

### Phenanthrol-2 (Z-1) wurde nach L.F. Fieser, Organic Synthesis Coll. Vol. II, 482 (1945) hergestellt.

Die Synthese von **1-Amino-phenanthrol-2 (Z-2)** gelang durch Azokupplung von diazotierter Sulfanilsäure mit Phenanthrol-2 **(Z-1)** und anschließender Reduktion des gebildeten Azofarbstoffes (L.F. Tietze, Th. Eicher, Reaktionen und Synthesen, Georg Thieme Verlag Stuttgart, New York, 2. Auflage, S. 161, 1991).

### 2-Methyl-phenanthro[1,2-d]oxazol (Z-3):

52,3 g (0,25 mol) 1-Amino-phenanthrol-2 werden mit 121,7 g (0,75 mol) Orthoessigsäuretriethylester unter Rühren bei 90°C während 2 h umgesetzt und das gebildete Ethanol abdestilliert. Man läßt auf Raumtemperatur abkühlen und reinigt durch Säulenchromatographie an Kieselgel mit Methylenchlorid als Laufmittel. Die dünnschichtchromatographisch einheitlichen Fraktionen werden gesammelt, im Vakuum eingedampft und der Rückstand aus Ligroin heiß umkristallisiert. Ausbeute: 42,5 g (73,6 % d.Th.).

### 2-Methyl-phenanthro[1,2-d]oxazolio-3-propansulfonat (Z-4):

4,6 g (0,020 mol) **Z-3** und 2,7 g (0,022 mol) Propansulton werden zusammen in 1,5 ml m-Kresol 1,5 h bei 135°C gerührt. Man läßt auf 70°C abkühlen fügt 15 ml Ethanol zu und läßt unter Rühren auf Raumtemperatur abkühlen. Der gebildete Niederschlag wird abgesaugt, mit Ethanol gewaschen und getrocknet. Ausbeute: 5,06 g (71,0 % d.Th.).

### 2-(2-Ethoxy-butenyl)-3-ethyl-naphtho[1,2-d]oxazolio-3-propansulfonat (Z-5):

10,0 g (0,028 mol) **Z-4** und 11,3 ml (0,056 mol) Orthopropionsäuretriethylester werden zusammen mit 12,5 ml m-Kresol unter Rühren auf 110 bis 120°C erhitzt, dabei löst sich **Z-4** vollständig auf. Nach 0,5 h läßt man auf 50°C kommen, dosiert 15 ml Aceton zu, dabei kristallisiert das Produkt aus. Nach Abkühlen auf Raumtemperatur wird abgesaugt, mit Aceton gewaschen und der Rückstand mit 100 ml Aceton 3 h ausgekocht, abgesaugt, mit Aceton gewaschen und getrocknet. Ausbeute: 7,08 g (57,3 % d.Th.).

Um zu Trimethincyaninen der allgemeinen Formel **FS-A** zu gelangen (R = Et) setzt man **Z-5** mit einem Quartärsalz der allgemeinen Formel **QS-A** um. Als Beispiel für eine Trimethinsynthese soll die Herstellung von **FS4** dienen.

### 5'-Chlor-9-ethyl-3,3'-bis(3-sulfopropyl)-benzthia-phenanthro[1,2-d]oxazolcarbocyanin (FS4):

5 g (0,01 mol) 2-Methyl-5-chlor-benzthiazolio-3-propansulfonat und 4,40 g (0,01 mol) **Z-5** werden unter Rühren bei ca. 100°C in 40 ml Phenoxyethanol gelöst. Nach Abkühlen auf Raumtemperatur gibt man 0,68 g (0,01 mol) Natriummethylat zu, erhitzt 10 Minuten auf 90°C, läßt auf Raumtemperatur abkühlen, gibt 5 ml Wasser und 200 ml Aceton zu. Man läßt über Nacht auskristallisieren, saugt ab, wäscht zuerst mit Aceton dann mit Ethanol nach. Der Rohfarbstoff wird durch Mitteldruckchromatographie gereinigt, die dünnschichtchromatographisch einheitlichen Chargen werden gesamment, im Vakuum eingedampft und der Rückstand umkristallisiert: Der Rohfarbstoff wird in Methanol/Wasser = 20/1 gelöst, die Lösung filtriert und mit 70 ml n-Propanol versetzt. Man läßt den Farbstoff über Nacht auskristallisieren, saugt ab und wäscht mit n-Propanol nach. Der Farbstoff wird im Vakuum bei 60°C bis zur Gewichtskonstanz getrocknet.
Ausbeute: 0,94 g (13 % d.Th.).

Aus **Schema 2** kann der Zugang zu Trimethincyaninen, die mindestens ein Anthraoxazol enthalten, entnommen werden. (Die Ausgangsverbindung **Z-10** wurde von Anthracenol-2 **Z-6** (CH. Bilger, P. Demerseman, R. Royen, J. Heterocyclic Chem. 22, 735 (1985)) analog zu **Z-5** hergestellt): 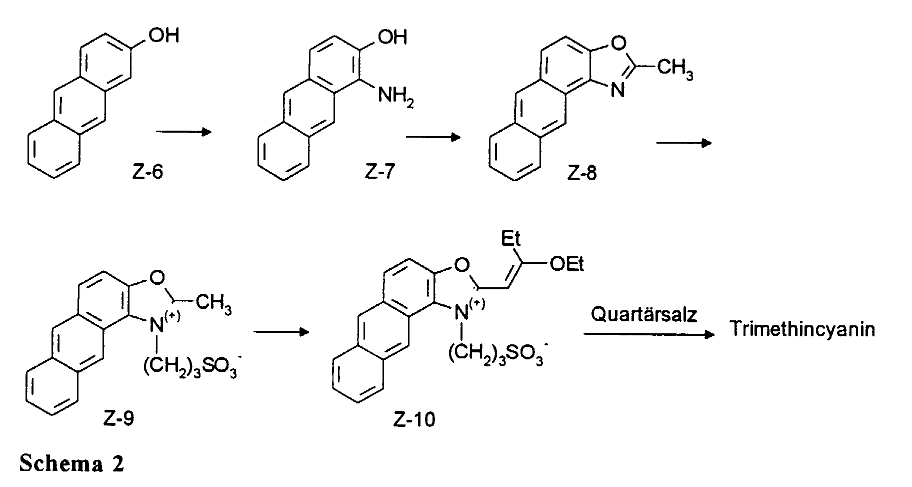 Die Synthesebeschreibung von **FS11** soll als Beispiel für die Herstellung eines Trimethincyanins welches ein Anthraoxazol enthält dienen:

### 9-Ethyl-3,3'-bis(3-sulfopropyl)-phenanthro[1,2-d]oxazol-anthra[1',2'-d]oxazolcarbocyanin (FS11):

4,40 g (0,01 mol) **Z-10** und 3,55 g (0,01 mol) **Z-4** werden in 20 ml DMF suspendiert, unter Rühren mit 2,58 g (0,02 mol) Triethylamin versetzt und auf 60°C erwärmt. Nach spätestens 0,5 h sind die Edukte in Lösung und nach frühestens 1 h beginnt der Farbstoff auszukristallisieren. Nach Abkühlen auf Raumtemperatur wird abgesaugt, der Rückstand in Methanol gelöst und mit 4,10 g (0,02 mol) Kaliumiodid gelöst in Methanol versetzt. Nach Absaugen des ausgefällten Farbstoffes, waschen mit Methanol, wird der Rohfarbstoff 3 h mit Methanol ausgekocht. Nach Abkühlen auf Raumtemperatur wird abgesaugt, gewaschen und getrocknet.
Ausbeute: 1,18 g (15 % d.Th.).

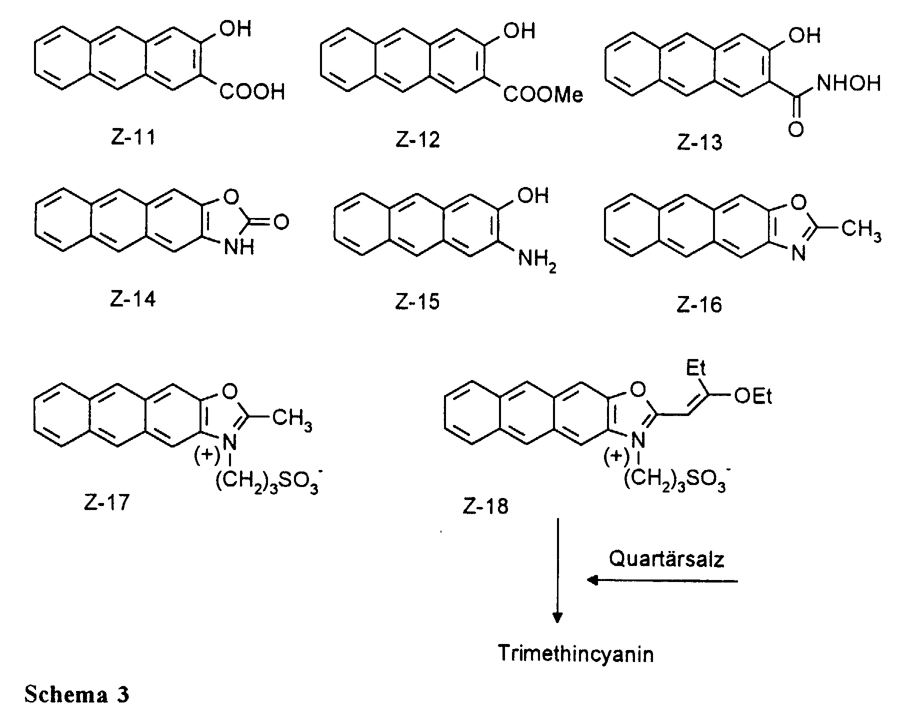

Ausgehend von 3-Carboxy-anthracenol-2 **Z-11** (D.R.P. 564 129 (1931)) wird der Methylester hergestellt (L.F. Tietze, Th. Eicher Reaktionen und Synthesen 2. Auflage (1991) S. 130), welcher zur Hydroxamsäure **Z-13** wie folgt umgesetzt wird:

### 3-(N-Hydroxy)-carbonamid-anthracenol-2 (Z-13)

37,8 g (0,150 mol) **Z-12** und 15,6 g (0,025 mol) Hydroxylammoniumchlorid werden unter Rühren in einem Gemisch von 150 ml Wasser und 180 ml Ethanol mit 21 g NaOH gelöst in 95 ml Wasser versetzt und 3 h bei 40°C gehalten. Nach Abkühlen auf Raumtemperatur wird mit konzentrierter Salzsäure angesäuert, das ausgefallene Produkt abgesaugt, gründlich mit Wasser gewaschen und bis zur Gewichtskonstanz getrocknet. Das Rohprodukt wird in 600 ml Pyridin gelöst, filtriert und mit 600 ml Wasser versetzt. Der Niederschlag wird nach 18 h abgesaugt, mit Wasser gewaschen und bis zur Gewichtskonstanz getrocknet.
Ausbeute: 20,1 g (52,9 % d.Th.).

Die weitere Umsetzung zu Anthra[2,3-d]oxazolon **Z-14** erfolgt durch eine Lossenumlagerung (Houben-Weyl: Methoden der organischen Chemie). Die Verseifung von **Z-14** erfolgt in wäßriger Natronlauge und führt in 85 %iger Ausbeute zu 3-Amino-anthracenol-2 **Z-15**. Die Herstellung der Oxazolbase **Z-16**, des Quartärsalzes **Z-17** und der Zwischenverbindung **Z-18 (Schema 3)** erfolgen analog zu **Z-3, Z-4** und **Z-5 (Schema 1)**.
Die Zwischenverbindung **Z-18** kann mit Quartärsalzen zu Trimethin-cyaninen analog **Schema 1** umgesetzt werden.

### Beispiele für die Synthese von Phenanthro- bzw. Anthrathiazol enthaltenden Trimethin-cyaninen und deren Vorstufen

Anthra[1,2-d]thiazol **Z-19** (I.I. Levkoev, V.V. Durmashkina, J. Gen. Chem. (USSR) **15**, 215-224 (1945); CA 2989/3 (1946)) kann nach **Schema 4** zu Trimethincyaninen umgesetzt werden. Die Umsetzungen von **Z-19** zu Trimethincyaninen erfolgen analog zu denen von **Z-3 (Schema 1)**. Farbstoffkondensation gemäß **FS11** ist ebenfalls möglich.

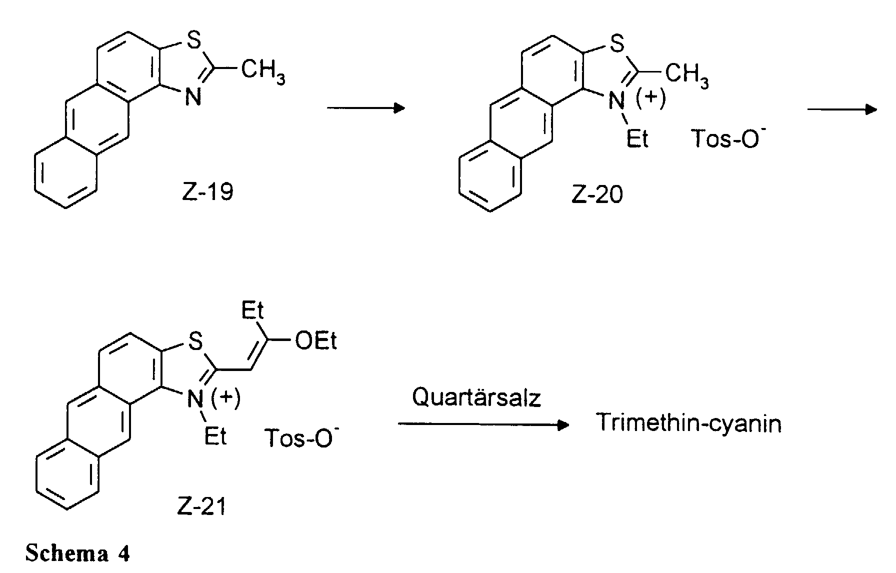

2-Methyl-phenanthro[1,2-d]thiazol **Z-23** kann ausgehand von N-Acetyl-1-aminophenanthren **Z-22** (W.E. Bachmann, Ch.H. Boatner, J. Am. Chem. Soc. 58, 2097 (1936)) analog **Z-19** synthetisiert werden. Die Quarternierung erfolgt analog zu **Z-3** und die Bildung von **Z-25** analog zu **Z-4**. Die Farbstoffkondensationsreaktionen können analog zu **FS4** oder **FS11** durchgeführt werden.

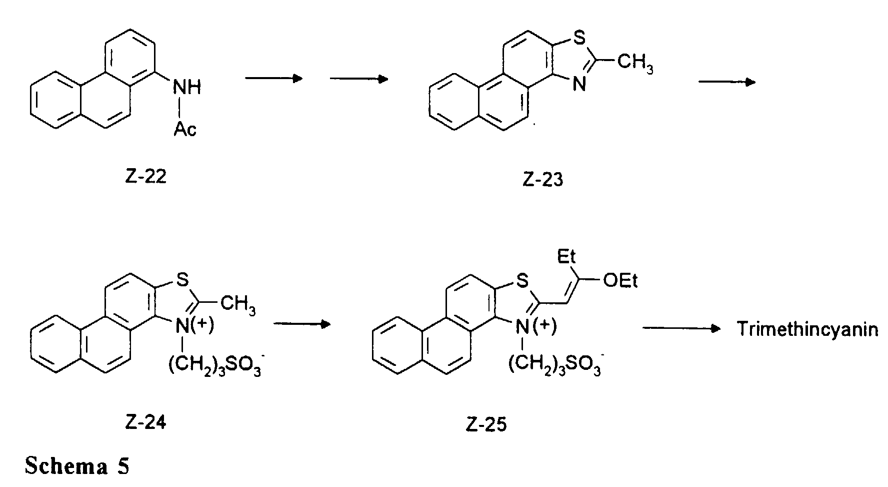

Beispiele für die Synthese von Phenanthro- bzw. Anthraimidazol enthaltenden Trimethincyaninen

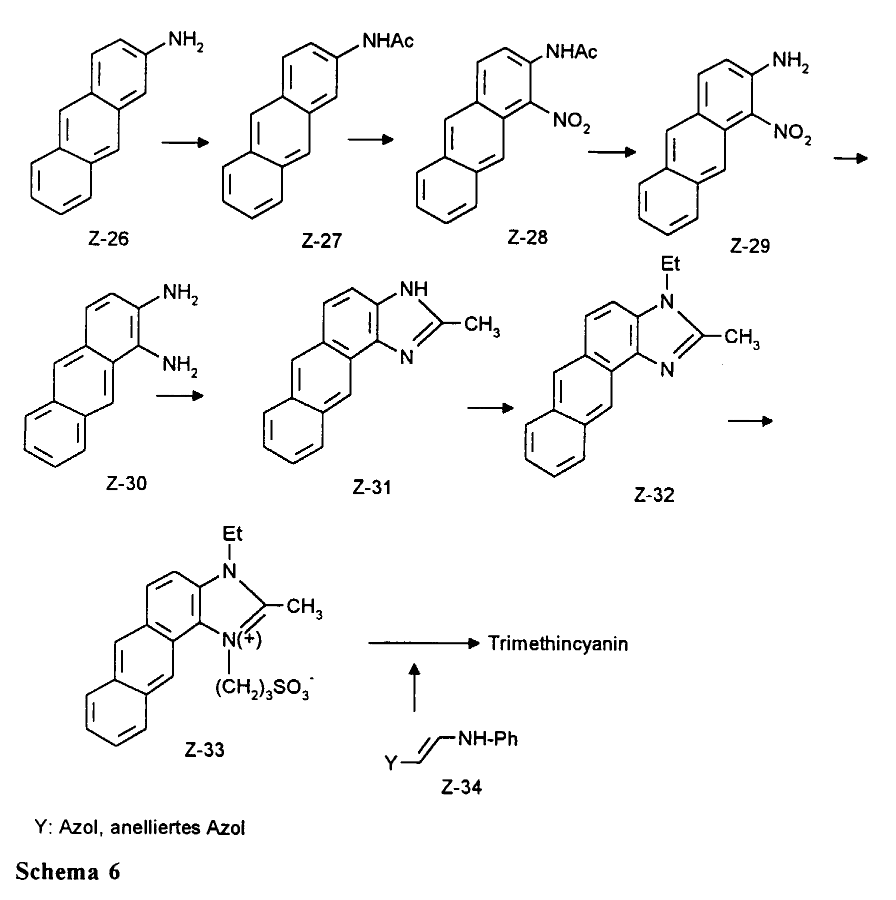

2-Amino-1-nitro-anthracen **Z-29** kann ausgehend von 2-Anthracenylamin **Z-26** (Helv. Chim. Acta **13**, 429 (1990)) nach bekanntem Synthesemuster hergestellt werden (L.F. Tietze, Th. Eicher, Reaktionen und Synthesen, Georg Thieme Verlag Stuttgart, New York, 2.Auflage, S. 153 bis 154, 1991). Die Reduktion der Nitroverbindung **Z-29** zum Diamin **Z-30** (Houben-Weyl, Methoden der organischen Chemie) und anschließende Cyclisierung mit Essigsäuretriethylorthoester führt (analog **Z-3**) zu 2-Methylanthra[1,2-d]imidazol **Z-31**. Die Herstellung von **Z-32** durch basenkatalysierte Alkylierung von **Z-31** gelingt durch Anwendung der Vorschrift zur Alkylierung von 1H-Imidazolen von B. Pilarski, Liebigs Ann. Chem., 1078 (1983). Die Quaternierung zu **Z-33** erfolgt analog **Z-4**.

Ausgehend von 1-Aminophenanthren kann analog zu **Z-33** das entsprechende 1-Ethyl-2-methyl-phenanthro[1,2-d]imidazolio-3-propansulfonat **Z-36** hergestellt werden.

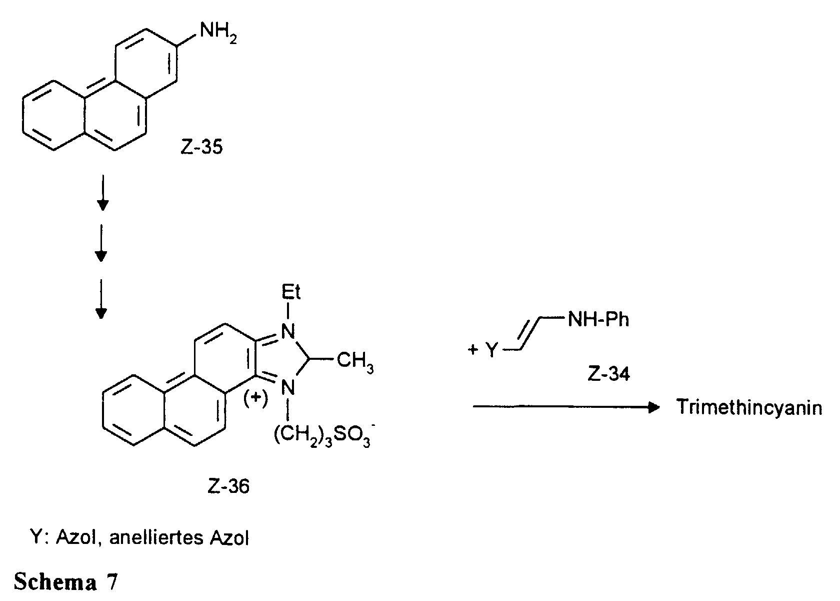

Die Synthese von **FS39** soll als Beispiel für die Herstellung eines Anthra- bzw. Phenanthroimidazols enthaltenden Trimethincyanins dienen **(Schema 8)**:

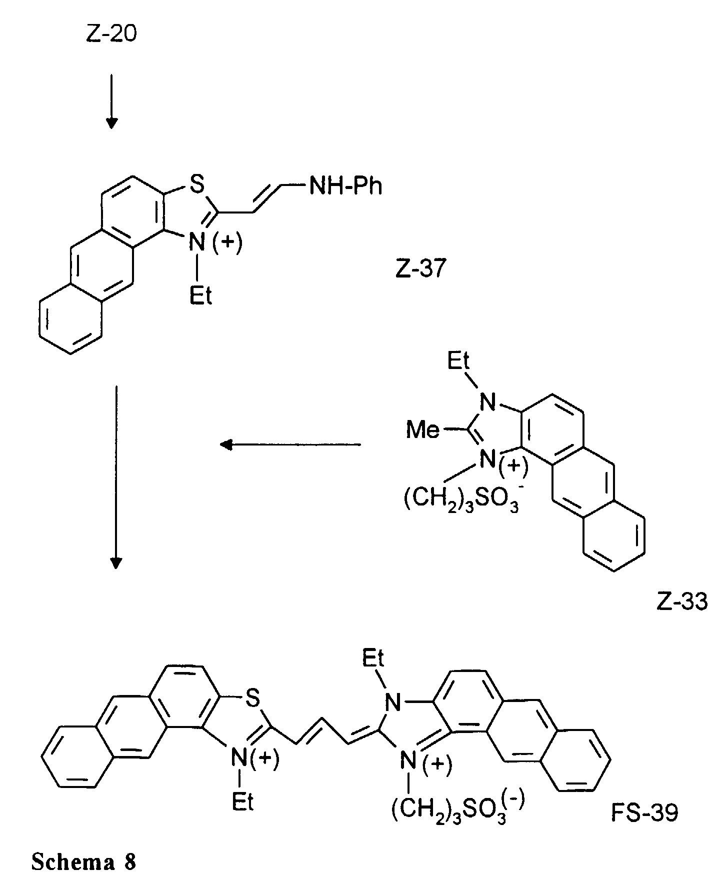

### 3-Ethyl-2-anilinovinyl-anthra[1,2-d]thiazolium-tosylat (Z-37):

8,95 g (20 mmol) **Z-20** (Herstellung analog zu **Z-4**) werden in 20 ml m-Kresol unter N₂-Atmosphäre digeriert, mit 5,10 g (0,26 mmol) Diphenylformamidin versetzt und 1,5 h bei 120°C gerührt. Man läßt auf Raumtemperatur kommen, gibt 20 ml Aceton zu, saugt den gebildeten Niederschlag ab und kocht mit 100 ml Aceton 1 h aus, saugt nach Abkühlen auf Raumtemperatur ab, wäscht mit Aceton nach, kocht den Rückstand 2 h mit 50 ml Ethanol aus. Nach Absaugen, waschen mit Ethanol und Trocknen bis zur Gewichtskonstanz erhält man 8,18 g (70,4 % d.Th.) **Z-37**.

### Synthese des Trimethincyanins FS39

5,53 g (10 mmol) **Z-37** werden in 35 ml DMF unter N₂-Atmosphäre digeriert, mit 15 ml Acetanhydrid und 2,5 ml Triethylamin versetzt und 20 Minuten bei Raumtemperatur gerührt. Nach Zugabe von 3,82 g (10 mmol) **Z-33** rührt man 2,5 h bei 70°C. Nach Abkühlen auf Raumtemperatur wird der ausgefallene Farbstoff abgesaugt, mit DMF gewaschen und 2 h mit 100 ml Aceton ausgekocht. Nach Abkühlen auf Raumtemperatur wird abgesaugt, mit Aceton gewaschen und der Rückstand 3 h mit 100 ml Methanol ausgekocht. Nach Abkühlen auf Raumtemperatur wird abgesaugt, mit Methanol gewaschen und getrocknet.
Ausbeute: 2,76 g (40,1 % d.Th.).

Die Synthese der Anthra- bzw. Phenantroazolmonomethincyanine erfolgt gemäß der Vorschrift von D. John. Mee, Res. Discl., 182, 301-3 (1979) und soll am Beispiel von **FS44** (Schema 9) demonstriert werden:

### Synthesevorschrift für Monomethincyanin FS44:

1.75 g (5,0 mmol) **Z-38** (Herstellung siehe D.John Mee) und 1,78 g (5.0 mmol) **Z-44** werden in 15 ml Formamid bei RT suspensiert, mit 1,55 g (15 mmol) Acetanhydrid versetzt und anschließend unter Kühlung 1.65 g (16,5 mmol) Triethylamin zudosiert, sodaß 20°C nicht überschritten werden. Nach 2 h sind die Edukte in Lösung, nach weiteren 18 h gibt man 116 ml Aceton zu, saugt den ausgefallenen Farbstoff ab, wäscht mit Aceton nach und kocht 1 h mit 100 ml Ethanol aus. Der Farbstoff wird abgesaugt, mit Ethanol gewaschen und getrochnet.
Ausbeute: 2,26 g (68,5 % d.Th.).

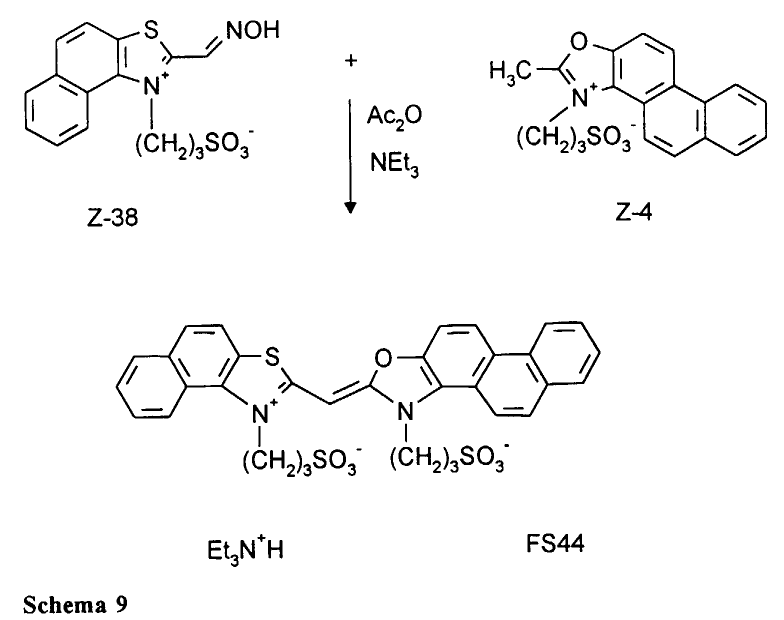

Mit den erfindungsgemäßen Sensibilisierungsfarbstoffen wird nicht nur eine zu hoher Empfindlichkeit führende, sondern auch eine stabile Sensibilisierung im blauen Spektralbereich zwischen 400 bis 490 nm, im grünen Spektralbereich zwischen 530 bis 590 nm und im roten Spektralbreich zwischen 600 bis 680 nm erreicht.

Zu noch höheren Empfindlichkeiten im grünen Spektralbereich gelangt man durch Zumischen eines oder zweier Sensibilisierungsfarbstoffe der allgemeinen Formel II: 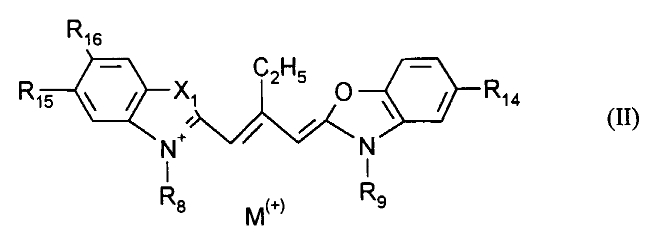 worin bedeuten
- X₁: O, S, Se oder 〉NR₈
- R₁₄, R₁₅, R₁₆: Wasserstoff, Alkyl (z.B. Methyl), Aryl (z.B. Phenyl), Halogen (z.B. Chlor), Alkoxy (z.B. Methoxy), -CN, -CHal₃ (z.B. -CF₃), -COR (worin R für -OH, Alkoxy, Aryloxy oder eine Aminogruppe steht), wobei
- R₈, R₉ und M^{⊕}: die vorstehend für Formel (I) angegebene Bedeutung haben.

Geeignete Sensibilisierungsfarbstoffe der Formel II sind:
II-1: R₁₄ = R₁₅ = Phenyl, R₈, R₉ = -(CH₂)₂SO₃^{⊖}, M^{⊕} = K^{⊕}, R₁₆ = H, X₁ = O,
II-2: R₁₄ = R₁₅ = Phenyl, R₈, R₉ = -(CH₂)₃SO₃^{⊖}, M^{⊕} = K^{⊕}, R₁₆ = H, X₁ =O,
II-3: R₁₄ = R₁₅ = Phenyl, R₈, R₉ = -(CH₂)₂CHMe-SO₃^{⊖}, M^{⊕} = K^{⊕} , R₁₆ = H, X₁ = O,
II-4: R₁₄ = R₁₅ = Phenyl, R₈ = -(CH₂)₃SO₃^{⊖}, R₉ = -(CH₂)₂-SO₃^{⊖}, M^{⊕} = K^{⊕}, R₁₆ = H, X₁ = O,
II-5: R₁₄ = Cl, R₁₅ = Phenyl, R₈, R₉ = -(CH₂)₃SO₃^{⊖} , M^{⊕} = Na^{⊕}, R₁₆ = H, X₁ = O,
II-6: R₁₄ = Cl, R₁₅ = Phenyl, R₉ = -(CH₂)₃SO₃^{⊖}, M^{⊕} = Na^{⊕}, R₁₆ = H, X₁ = O, R₈ = -(CH₂)₂CHMe SO₃^{⊖} ,
II-7: R₁₄ = Cl, R₁₅ = Methyl, R'₁₂ = -OCH₃, X₁ = S, R₈ = Sulfobutyl, R₉ = Sulfopropyl, M^{⊕} = Na^{⊕},
II-8: R₁₄ = Cl, R₁₅ = Methyl, R₁₆ = -OCH₃, X₁ = S, R₈ = R₉ = Sulfopropyl, M^{⊕} = Na^{⊕},
II-9: R₁₄ = Phenyl, R₁₅ = R₁₆ = CH₃, X₁ = S, R₈ = Sulfobutyl, R₉ = Sulfoethyl, M^{⊕} = Na^{⊕},
II-10: R₁₄ = Phenyl, R₁₅ = R₁₆ = CH₃, X₁ = S, R₈ = R₉ = Sulfopropyl, M^{⊕}= Na^{⊕} .

Zu höheren Empfindlichkeiten im roten Spektralbereich gelangt man durch Zumischen eines oder zweier Sensibilisierungsfarbstoffe der allgemeinen Formel III: 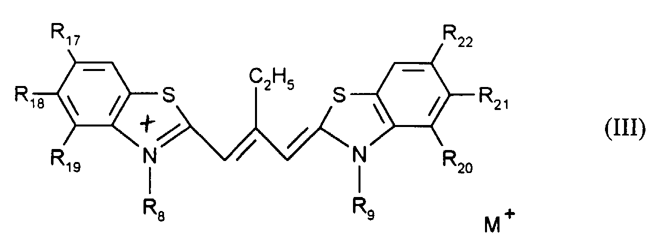 worin bedeuten
- R₁₇, R₁₈, R₁₉, R₂₀, R₂₁, R₂₂: Wasserstoff, Alkyl, Aryl, Halogen, Alkoxy, -CN, -CHal₃, -COR (worin R für -OH, Alkoxy, Aryloxy oder eine Aminogruppe steht), oder R ₁₈ zusammen mit R₁₇ oder R₁₉ bzw. R₂₁ zusammen mit R₂₀ oder R₂₂ die erforderlichen Reste zur Vervollständigung eines Naphthiazolringsystems,
wobei R₈, R₉ und M^{⊕} die für Formel I angegebene Bedeutung haben.

Geeignete Beispiele für Sensibilisatoren der Formel III sind:
III-1: R₁₇, R₁₉, R₂₀, R₂₂ = H; M^{⊕} = Na^{⊕} ; R₁₈, R₂₁ = Cl; R₈, R₉ = Sulfopropyl;
III-2: R₁₇, R₁₉, R₂₀, R₂₂ = H; R₁₈, R₂₁ = Cl; R₈ = Sulfopropyl; R₉ = Ethyl;
III-3: R₁₇, R₂₂ = H; R₁₈ zusammen mit R₁₉ und R₂₀ zusammen mit R₂₁ jeweils -CH=CH-CH=CH-; R₈, R₉ = Sulfopropyl; M^{⊕} = HN^{⊕}(C₂H₅)₃;
III-4: R₁₇, R₂₂ = H, R₁₈ zusammen mit R₁₉ und R₂₀ zusammen mit R₂₁ jeweils -CH=CH-CH=CH-; R₈ = Sulfopropyl; R₉ = Ethyl;
III-5: R₁₉, R₂₀ = H; R₁₇ zusammen mit R₁₈ und R₂₁ zusammen mit R₂₂ jeweils -CH=CH-CH=CH-; R₈, R₉ = Sulfopropyl; M^{⊕} = HN(C₂H₅);
III-6: R₁₉, R₂₀ = H; R₁₇ zusammen mit R₁₈ und R₂₁ zusammen mit R₂₂ jeweils -CH=CH-CH=CH-; R₈ = Sulfopropyl; R₉ = Ethyl;
III-7: R₁₇, R₂₀, R₂₂ = H; R₁₈ zusammen mit R₁₉ = -CH=CH-CH=CH-; R₂₁ = Cl; R₈, R₉ = Sulfopropyl; M^{⊕} = Na^{⊕};
III-8: R₁₇, R₂₀, R₂₂ = =H; R₁₈ zusammen mit R₁₉ = -CH=CH-CH=CH-; R₂₁ = Cl; R₈ = Sulfopropyl; R₉ = Ethyl;
III-9: R₁₇, R₂₀, R₂₂ = H; R₁₈ zusammen mit R₁₉ = -CH=CH-CH=CH-; R₂₁ = Cl; R₈ = Ethyl; R₉ = Sulfopropyl;
III-10: R₁₇ zusammen mit R₁₈ und R₂₀ zusammen mit R₂₁ jeweils -CH=CH-CH=CH-; R₁₉, R₂₂ = H; R₈, R₉ = Sulfopropyl; M^{⊕} = Na^{⊕};
III-11: R₁₇ zusammen mit R₁₈ = -CH=CH-CH=CH-; R₁₉, R₂₀, R₂₂ = H; R₂₁ = Cl; R₈, R₉ = Sulfopropyl; M^{⊕} = Na^{⊕}.

### Beispiele

### Beispiel 1

Unter Verwendung des Sensibilisierungsfarbstoffes **FS4** wurde ein lichtempfindliches farbfotografisches Material wie folgt hergestellt:

Zu 100 g einer Silberbromidemulsion mit 10 mol-% AgI (Silbergehalt ausgedrückt in AgNO₃: 205,6 g pro kg Emulsion) mit breiter Korngrößenverteilung und einem Volumenschwerpunkt von 1,41 µm werden 41,3 mg des Stabilisators ST, gelöst in 6,88 g Wasser und 0,12 g In NaOH, hinzugegeben. Nach 45 Minuten Rühren bei 45°C werden 22,7 mg **FS4** gelöst in 22,7 ml Methanol zugegeben und weitere 60 Minuten bei 40°C gerührt. Dann gibt man 20 mg ST-A, gelöst in 4 g Wasser zu, rührt 10 Minuten bei 40°C, gibt dann unter Rühren 1,26 g des Kupplers K-1 und 1,89 g des Kupplers K-2, beide zusammen in 50,4 g Wasser, 3,15 g Trikresylphosphat und 0,22 g Netzmittel NM emulgiert, zu. Nach Zugabe von 120,0 ml 5 gew.-%iger wäßriger Gelatine und 100 ml Wasser gibt man nach 81 mg Netzmittel NM, gelöst in einem Gemisch aus 1,6 ml Wasser und 0,4 ml Methanol hinzu. Nach weiteren 15 Minuten wird die Emulsion vergossen und anschließend gehärtet.

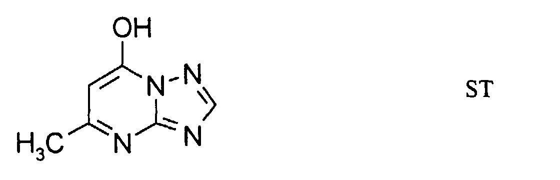

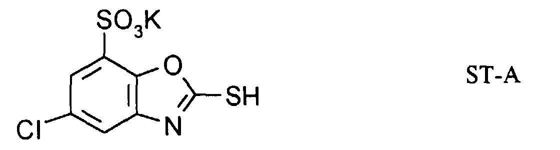

C₈H₁₇SO₃^{⊖} N^{⊕} (C₂H₅)₄ NM

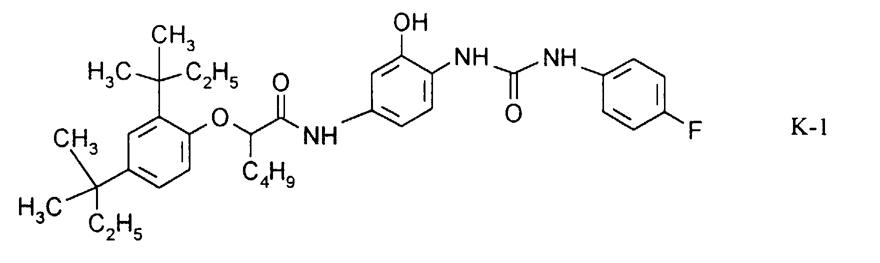

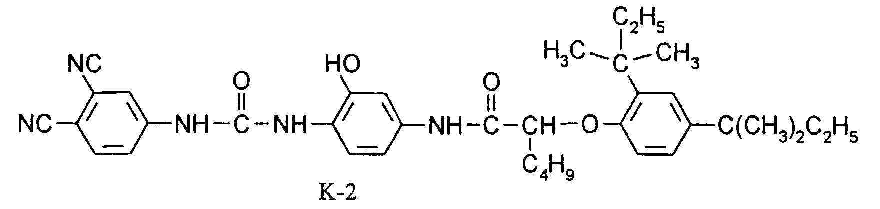

In gleicher Weise wurden weitere Materialien hergestellt mit dem Unterschied, daß anstelle des erfindungsgemäßen Sensibilisierungsfarbstoffes **FS4** andere Sensibilisierungsfarbstoffe verwendet wurden, wie aus Tabelle 1 ersichtlich wird. Von den so hergestellten Materialien wurde die Empfindlichkeit bestimmt. Hierzu wurden Proben der Materialien hinter einem Verlaufskeil belichtet und einer Colornegativverarbeitung gemäß "The Journal of Photographie Science, 1974, Seiten 597 und 598 "unterworfen. Die Ergebnisse sind in Tabelle 3 zusammengestellt.

**Tabelle 1**

| Probe | Empfindlichkeit * | λₘₐₓ [nm]** |
|---|---|---|
| FS4 | 1.00 | 596 |
| V-1 | 0,95 | 600/558 |
| V-2 | 0,89 | 600/550 |
| V-3 | 0,98 | 600 |
| V-4 | 0,98 | 598 |
| V-5 | 0,97 | 601 |

| | | |
|---|---|---|
| * Auf die Empfindlichkeit von FS4 normiert | | |
| ** λₘₐₓ: Sensibilisierungsmaximum | | |

Vergleichsverbindungen V-1 bis V-5: 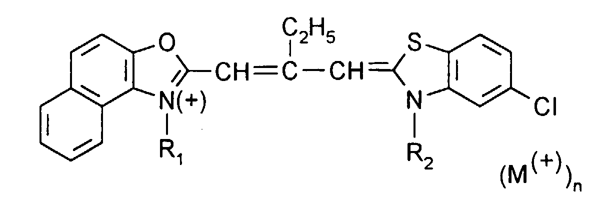
V-1 R₁ = Sulfopropyl; R₂ = Ethyl, n = 0,
V-2 R₁ = Sulfopropyl; R₂ = Sulfoethyl, n = 1, M^{⊕} = Na^{⊕},
V-3 R₁, R₂ = Sulfopropyl, n = 1, M^{⊕} = Na^{⊕},
V-4 R₁ = Sulfopropyl; R₂ = Sulfo-n-butyl, n = 1, M^{⊕} = Na^{⊕},
V-5 R₁ = Sulfopropyl; R₂ = -(CH₂)₂-CH(CH₃)-SO₃^{⊖}, n = 1, M^{⊕} = Na^{⊕}.

### Beispiel 2

Wie in Beispiel 1 beschrieben wurden die Empfindlichkeiten von entsprechend hergestellten Materialien bestimmt, die zusätzlich mit einem Sensibilisierungsfarbstoff der allgemeinen Formel III sensibilisiert waren. Der Farbstoff der Formel III wurde in der gleichen Menge verwendet wie der Farbstoff der Formel I bzw. der Vergleichsfarbstoff. Mit jedem Farbstoffpaar wurde die gleiche Oberflächenbedeckung erzielt wie in Beispiel 1. Die erzielten Empfindlichkeitswerte sind in Tabelle 2 dargestellt.

**Tabelle 2**

| Probe | Empfindlichkeit* | λₘₐₓ [nm] |
|---|---|---|
| FS4/III-1 | 1,00 | 599 |
| V-1/III-1 | 0,98 | 600-625 |
| V-2/III-1 | 0,93 | 600/630 |
| V-3/III-1 | 0,96 | 600-625 |
| V-4/III-1 | 0,97 | 600-625 |
| V-5/III-1 | 0,97 | 600-620 |

| | | |
|---|---|---|
| * Empfinclichkeiten auf die von FS4/III-1 normiert | | |

### Beispiel 3

Unter Verwendung des Sensibilisierungsfarbstoffes **FS1** wurde ein lichtempfindliches Material wie folgt hergestellt:

Zu 100 g einer Silberbromidemulsion mit 10 mol-% AgI (Silbergehalt in AgNO₃ ausgedrückt: 205,6 g pro kg Emulsion) mit breiter Korngrößenverteilung und einem Volumenschwerpunkt von 1,41 µm wurden 41,3 g des Stabilisators ST, gelöst in 6,88 g Wasser und 0,12 g In NaOH, hinzugegeben. Nach 45 Minuten Rühren bei 45°C wurden 21,1 mg **FS1** gelöst in einer Mischung von 6,8 g m-Kresol und 15,9 g Methanol zugegeben und weitere 60 Minuten bei 40°C gerührt. Dann gibt man 20 mg ST-A gelöst in 4 g Wasser zu, rührt 10 Minuten bei 40°C und gibt dann unter Rühren 4 g des Kupplers K-3 in 4 g Trikresylphosphat und 58 g Wasser emulgiert zu. Nach Zugabe von 120 mg 5 %iger wäßriger Gelatinelösung wurden noch 81 Netzmittel NM, gelöst in einem Gemisch aus 1,6 ml Wasser und 0,4 ml Methanol hinzugegeben. Nach weiteren 15 Minuten wird die Emulsion vergossen und anschließend gehärtet.

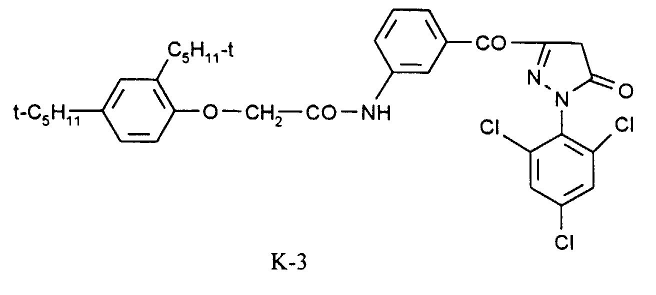

In gleicher Weise wurden weitere Materialien hergestellt mit dem Unterschied, daß anstelle des erfindungsgemäßen Sensibilisierungsfarbstoffes **FS1** andere Sensibilisierungsfarbstoffe verwendet wurden, wie aus Tabelle 3 ersichtlich. Von den so hergestellten Materialien wurde die Empfindlichkeit bestimmt. Hierzu wurden die Proben der Materialien hinter einem Verlaufskeil belichtet und einer Color-negativverarbeitung gemäß "The Journal of Photographie Science, 1974, Seiten 597 und 598" unterworfen. Die Ergebnisse sind in Tabelle 3 zusammengestellt.

**Tabelle 3**

| Probe | Empfindlichkeit* | λₘₐₓ [nm] |
|---|---|---|
| FS1 | 1 | 565 |
| V-6 | 0,97 | 560 |
| V-7 | 0,96 | 560 |
| V-8 | 0,68 | 540 |

| | | |
|---|---|---|
| * Empfindlichkeiten sind auf die von FSI normiert | | |

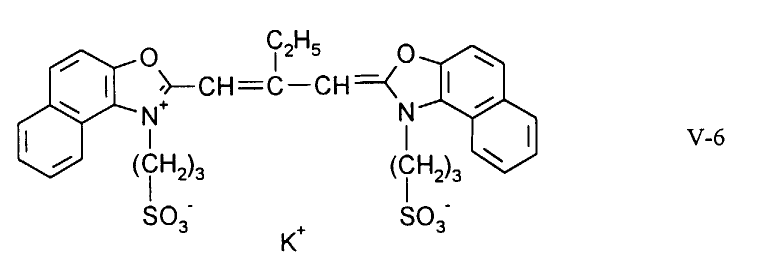

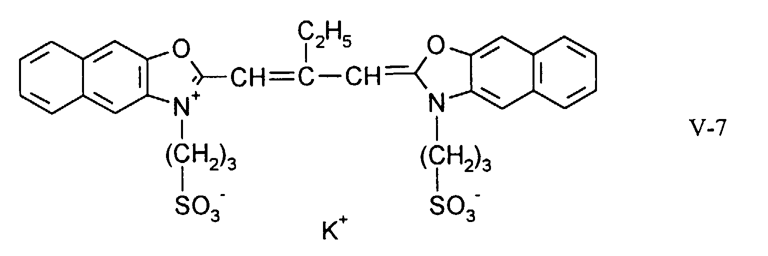

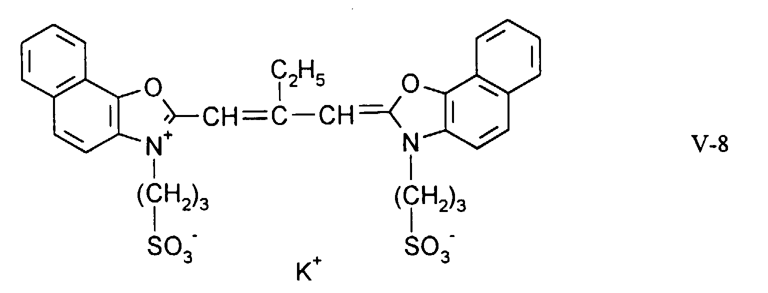

### Beispiel 4

Wie in Beispiel 3 beschrieben, wurden die Frischempfindlichkeiten von entsprechend hergestellten Materialien bestimmt, die zusätzlich mit einem Sensibilisierungsfarbstoff der allgemeinen Formel II sensibilisiert waren. Der Farbstoff der Formel II wurde in der gleichen Menge verwendet wie der Farbstoff der Formel I oder der Vergleichsfarbstoff. Mit jedem Farbstoffpaar wurde die gleiche Oberflächenbedeckung erzielt wie in Beispiel 3. Die erzielten Empfindlichkeitswerte sind in der Tabelle 4 dargestellt.

**Tabelle 4**

| Probe | Empfindlichkeit* | λₘₐₓ [nm] |
|---|---|---|
| II-4/FS1 | 1,00 | 550 |
| II-4/V-6 | 0,98 | 550 |
| II-4/V-7 | 0,96 | 548 |
| II-4/V-8 | 0,89 | 545 |

| | | |
|---|---|---|
| * Empfindlichkeiten auf die von II-4/FS1 normiert | | |

### Beispiel 5

Unter Verwendung des Sensibilisierungsfarbstoffes **FS44** wurde ein lichtempfindliches Material wie folgt hergestellt:

Zu 100 g einer Silberchloridemulsion (Silbergehalt in AgNO₃ ausgedrückt: 212 g AgNO₃ pro kg Emulsion) werden nach 45 Minuten Rühren bei 40°C, 13,5 mg **FS44** gelöst in einer Mischung von 1,35 g Phenoxyethanol und 12,15 g Methanol gegeben. Nach weiteren 60 Minuten Rühren bei 40°C gibt man 6 mg ST-B gelöst in 6 ml Wasser, 112,5 mg Kaliumbromid gelöst in 12 ml Wasser und 2,2 mg ST-C gelöst in 5 ml verdünnter Natronlauge hinzu. Nach 10 Minuten Rühren bei 40°C gibt man 50 ml Wasser, 81 g einer 20 gew.-%igen Gelatinelösung, 14,0 g Kuppler K-4 und 6,2 g Kuppler K-5 emulgiert in 204 g Wasser und 33,3 g Ölbildner 0-1 (polymerer Mischester aus Adipinsäure und einem Gemisch aus 1,3- und 1,4-Butandiol und 2-Ethylpropandiol), sowie 0,32 g NM-1 gelöst in 8 ml Wasser hinzu. Nach weiteren 15 Minuten wird die Emulsion vergossen und anschließend gehärtet.

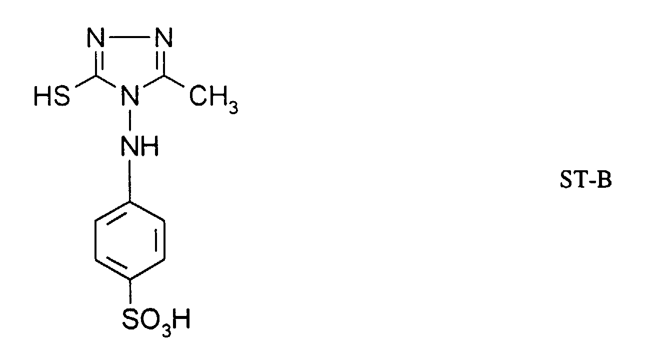

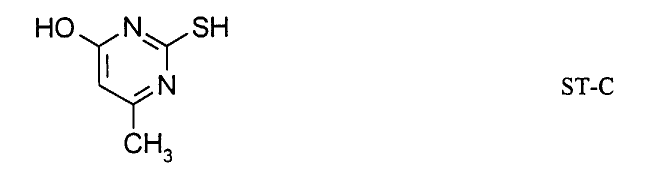

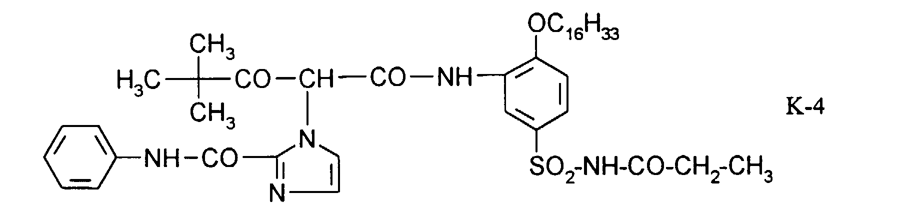

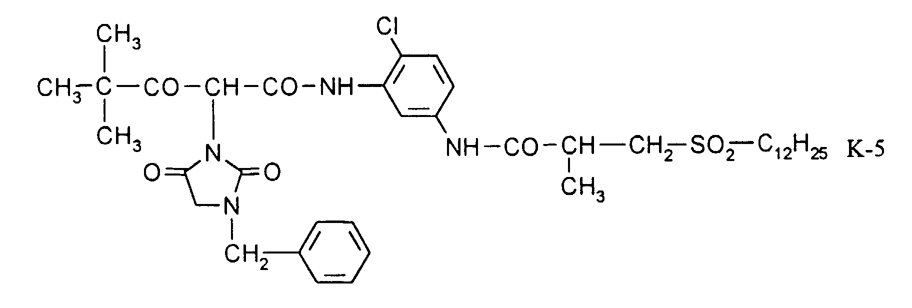

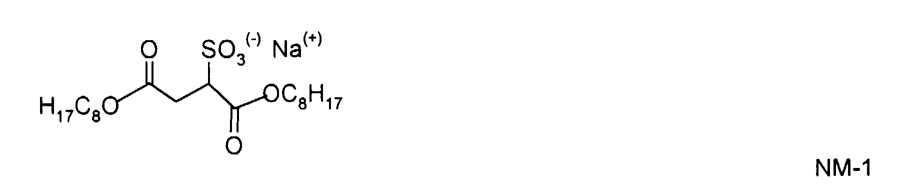

In gleicher Weise wurden weitere Materialien hergestellt mit dem Unterschied, daß anstelle des erfindungsgemäßen Sensibilisierungsfarbstoffs **FS44** andere Sensibilisierungsfarbstoffe verwendet wurden, wie aus Tabelle 5 ersichtlich. Von den so hergestellten Materialien wurde die Empfindlichkeit bestimmt. Hierzu wurden Proben der Materialien hinter einem Verlaufskeil belichtet und einer Color-negativverarbeitung gemäß "The Journal of Photographie Science, 1974, Seiten 597 und 598" unterworfen. Die Ergebnisse sind in Tabelle 5 zusammengestellt.

**Tabelle 5**

| Probe | Empfindlichkeit* | λₘₐₓ [nm] |
|---|---|---|
| FS44 | 1,00 | 470 |
| V-9 | 0,44 | 455 |
| V-10 | 0,49 | 455 |

| | | |
|---|---|---|
| * Empfindlichkeit auf die von FS44 normiert | | |

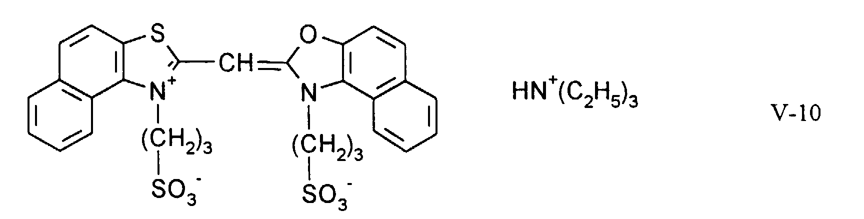

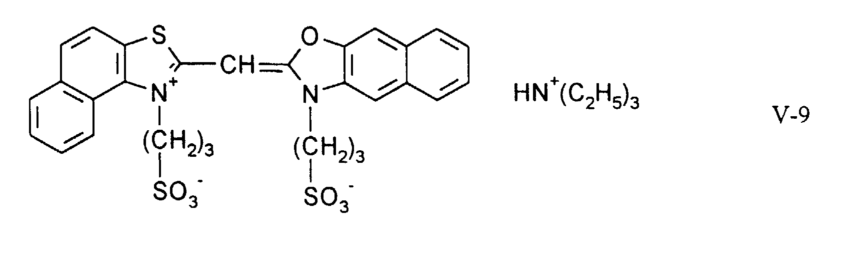

## Patentansprüche

1. Cyaninfarbstoff der allgemeinen Formel I 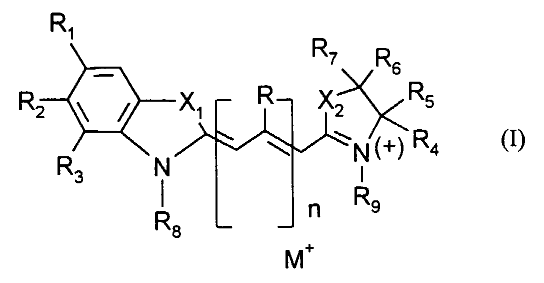 worin bedeuten:
X₁ und X₂ O, S, Se oder NR₁₀;
R₁ und R₂ oder R₂ und R₃ die restlichen Glieder eines gegebenenfalls substituierten Phenanthroazols oder Anthraazols und deren verbleibender Rest R₃ oder R₁ Wasserstoff;
R₄ und R₆ Wasserstoff oder zusammen eine π-Bindung,
R₅ und R₇ Wasserstoff, Alkyl oder Aryl oder
R₄, R₅, R₆ und R₇ die restlichen Glieder eines gegebenenfalls substituierten Benzazols, Naphthazols, Phenanthroazols oder Anthraazols;
R₈, R₉ Alkyl, Sulfoalkyl, Carboxyalkyl, -(CH₂)ₘ-CO-NR₁₁-SO₂-R₁₂ oder -(CH₂)ₘ-SO₂-NR₁₁-CO-R₁₂;
R₁₀ einen Rest wie R₈/R₉ oder Aryl,
R₁₁ Wasserstoff oder die beim Entfernen eines Protons zurückbleibende negative Ladung (⊖);
R₁₂ Alkyl, Aryl, -O^{⊖}, -N(R₁₃)₂;
R₁₃ Wasserstoff, Alkyl oder Aryl (gleich oder verschieden);
R Wasserstoff, C₁-C₄-Alkyl, C₁-C₄-Alkylthio oder Phenyl;
m eine ganze Zahl von 1 bis 10;
n 0 oder 1; und
M⁺ ein gegebenenfalls zum Ladungsausgleich erforderliches Kation,
mit der Maßgabe, daß der Cyaninfarbstoff der Formel I wenigstens eine Sulfoalkylgruppe, eine Carboxyalkylgruppe, eine Gruppe -(CH₂)ₘ-CO-NR₁₁-SO₂-R₁₂ oder eine Gruppe -(CH₂)ₘ-SO₂-NR₁₁-CO-R₁₂ aufweist.

2. Farbfotografisches Aufzeichnungsmaterial mit mindestens einer lichtempfindlichen Silberhalogenidemulsionsschicht, dessen Silberhalogenid mit einem Cyaninfarbstoff der allgemeinen Formel I spektral sensibilisiert ist, 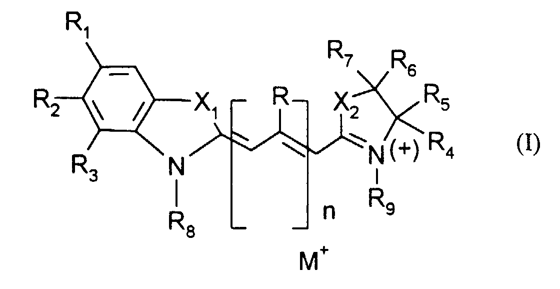 worin bedeuten:
X₁ und X₂ O, S, Se oder NR₁₀;
R₁ und R₂ oder R₂ und R₃ die restlichen Glieder eines gegebenenfalls substituierten Phenanthroazols oder Anthraazols und deren verbleibender Rest R₃ oder R₁ Wasserstoff;
R₄ und R₆ Wasserstoff oder zusammen eine π-Bindung,
R₅ und R₇ Wasserstoff, Alkyl oder Aryl oder
R₄, R₅, R₆ und R₇ die restlichen Glieder eines gegebenenfalls substituierten Benzazols, Naphthazols, Phenanthroazols oder Anthraazols;
R₈, R₉ Alkyl, Sulfoalkyl, Carboxyalkyl, -(CH₂)ₘ-CO-NR₁₁-SO₂-R₁₂ oder (CH₂)ₘ-SO₂-NR₁₁-CO-R₁₂;
R₁₀ einen Rest wie R₈/R₉ oder Aryl,
R₁₁ Wasserstoff oder die beim Entfernen eines Protons zurückbleibende negative Ladung (⊖);
R₁₂ Alkyl, Aryl, -O^{⊖}, -N(R₁₃)₂;
R₁₃ Wasserstoff, Alkyl oder Aryl (gleich oder verschieden);
R Wasserstoff, C₁-C₄-Alkyl, C₁-C₄-Alkylthio oder Phenyl;
m eine ganze Zahl von 1 bis 10;
n 0 oder 1; und
M⁺ ein gegebenenfalls zum Ladungsausgleich erforderliches Kation,
mit der Maßgabe, daß der Cyaninfarbstoff der Formel I wenigstens eine Sulfoalkylgruppe, eine Carboxyalkylgruppe, eine Gruppe -(CH₂)ₘ-CO-NR₁₁-SO₂-R₁₂ oder eine Gruppe -(CH₂)ₘ-SO₂-NR₁₁-CO-R₁₂ aufweist.

3. Fotografisches Aufzeichnungsmaterial nach Anspruch 2, dadurch gekennzeichnet, daß das Silberhalogenid zusätzlich mit einem Cyaninfarbstoff der allgemeinen Formel II spektral sensibilisiert ist, 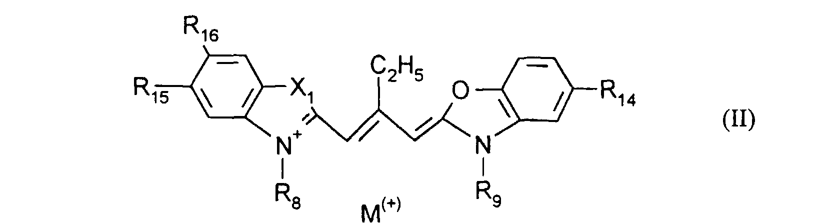 worin bedeuten
X₁ O, S, Se oder 〉NR₈
R₁₄, R₁₅, R₁₆ Wasserstoff, Alkyl, Aryl, Halogen, Alkoxy, -CN, -CHal₃, -COR (worin R für -OH, Alkoxy, Aryloxy oder eine Aminogruppe steht),
wobei R₈, R₉ und M^{⊕} die für Formel I angegebene Bedeutung haben.

4. Fotografisches Aufzeichnungsmaterial nach Anspruch 2, dadurch gekennzeichnet, daß das Silberhalogenidd zusätzlich mit einem oder mehr als einem Cyaninfarbstoff der allgemeinen Formel III spektral sensibilisiert ist, 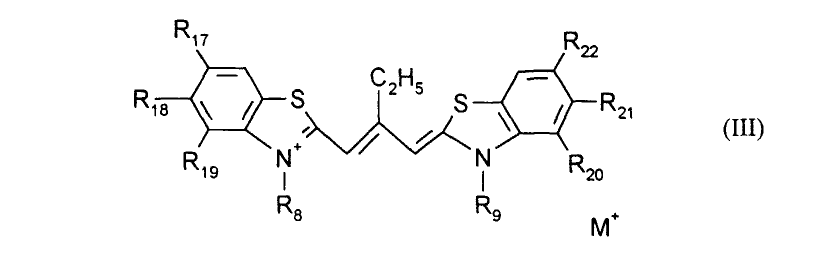 worin bedeuten
R₁₇, R₁₈, R₁₉, R₂₀, R₂₁, R₂₂ Wasserstoff, Alkyl, Aryl, Halogen, Alkoxy, -CN, -CHal₃, -COR (worin R für -OH, Alkoxy, Aryloxy oder eine Aminogruppe steht),
oder R ₁₈ zusammen mit R₁₇ oder R₁₉ bzw. R₂₁ zusammen mit R₂₀ oder R₂₂ die erforderlichen Reste zur Vervollständigung eines Naphthiazolringsystems,
wobei R₈, R₉ und M^{⊕} die für Formel I angegebene Bedeutung haben.

## Claims

1. Cyanine dye of the general formula I 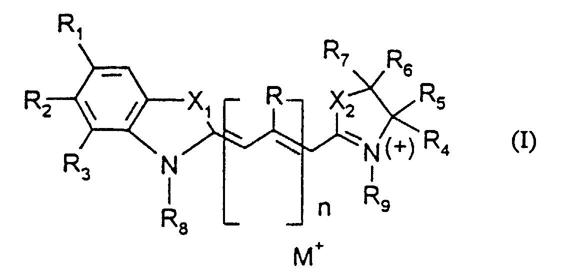 in which
X₁ and X₂ mean O, S, Se or NR₁₀;
R₁ and R₂ or R₂ and R₃ mean the remaining members of an optionally substituted phenanthroazole or anthraazole and the other residue R₃ or R₁ means hydrogen;
R₄ and R₆ mean hydrogen or, together, a π bond,
R₅ and R₇ mean hydrogen, alkyl or aryl or
R₄, R₅, R₆ and R₇ mean the remaining members of an optionally substituted benzazole, naphthazole, phenanthroazole or anthraazole;
R₈, R₉ mean alkyl, sulfoalkyl, carboxyalkyl, -(CH₂)ₘ-CO-NR₁₁-SO₂-R₁₂ or - (CH₂)ₘ-SO₂-NR₁₁-CO-R₁₂;
R₁₀ means a residue as R₈/R₉ or aryl,
R₁₁ means hydrogen or the negative charge (^{⊖}) remaining on removal of a proton;
R₁₂ means alkyl, aryl, -O^{⊖}, -N(R₁₃)₂;
R₁₃ means hydrogen, alkyl or aryl (identical or different);
R means hydrogen, C₁-C₄ alkyl, C₁-C₄ alkylthio or phenyl;
m means an integer from 1 to 10;
n means 0 or 1; and
M⁺ means a cation optionally required to equalise charges,
providing that the cyanine dye of the formula I contains at least one sulfoalkyl group, a carboxyalkyl group, a group -(CH₂)ₘ-CO-NR₁₁-SO₂-R₁₂ or a group -(CH₂)ₘ-SO₂-NR₁₁-CO-R₁₂.

2. Colour photographic recording material having at least one photosensitive silver halide emulsion layer, the silver halide of which is spectrally sensitised with a cyanine dye of the general formula I, 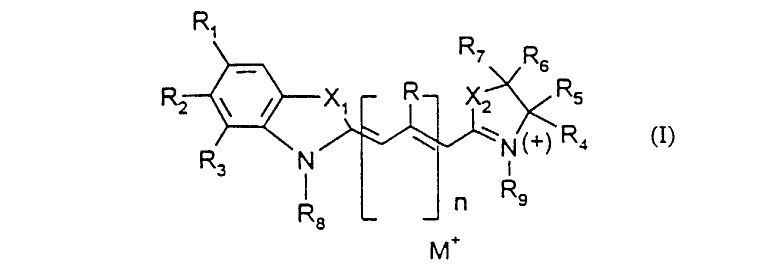 in which
X₁ and X₂ mean O, S, Se or NR₁₀;
R₁ and R₂ or R₂ and R₃ mean the remaining members of an optionally substituted phenanthroazole or anthraazole and the other residue R₃ or R₁ means hydrogen;
R₄ and R₆ mean hydrogen or, together, a π bond,
R₅ and R₇ mean hydrogen, alkyl or aryl or
R₄, R₅, R₆ and R₇ mean the remaining members of an optionally substituted benzazole, naphthazole, phenanthroazole or anthraazole;
R₈, R₉ mean alkyl, sulfoalkyl, carboxyalkyl, -(CH₂)ₘ-CO-NR₁₁-SO₂-R₁₂ or -(CH₂)ₘ-SO₂-NR₁₁-CO-R₁₂;
R₁₀ means a residue as R₈/R₉ or aryl,
R₁₁ means hydrogen or the negative charge (^{⊖}) remaining on removal of a proton;
R₁₂ means alkyl, aryl, -O^{⊖}, -N(R₁₃)₂;
R₁₃ means hydrogen, alkyl or aryl (identical or different);
R means hydrogen, C₁-C₄ alkyl, C₁-C₄ alkylthio or phenyl;
m means an integer from 1 to 10;
n means 0 or 1; and
M⁺ means a cation optionally required to equalise charges,
providing that the cyanine dye of the formula I contains at least one sulfoalkyl group, a carboxyalkyl group, a group -(CH₂)ₘ-CO-NR₁₁-SO₂-R₁₂ or a group -(CH₂)ₘ-SO₂-NR₁₁-CO-R₁₂.

3. Photographic recording material according to claim 2, characterised in that the silver halide is additionally spectrally sensitised with a cyanine dye of the general formula II 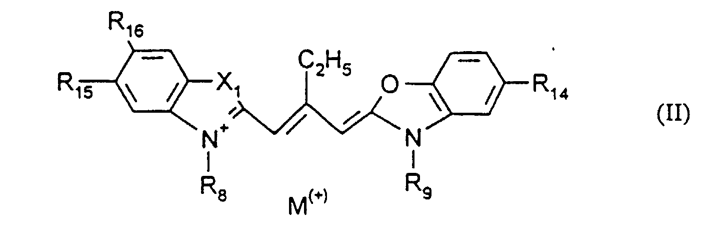 in which
X₁ means O, S, Se or 〉NR₈
R₁₄, R₁₅, R₁₆ mean hydrogen, alkyl, aryl, halogen, alkoxy, -CN, -CHal₃, -COR (in which R denotes -OH, alkoxy, aryloxy or an amino group),
wherein R₈, R₉ and M^{⊕} have the meaning stated for formula I.

4. Photographic recording material according to claim 2, characterised in that the silver halide is additionally spectrally sensitised with one or more than one cyanine dye of the general formula III 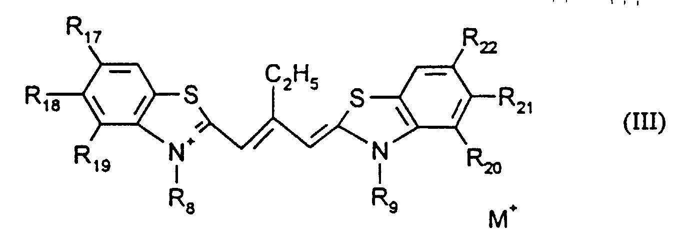 in which
R₁₇, R₁₈, R₁₉, R₂₀, R₂₁, R₂₂ mean hydrogen, alkyl, aryl, halogen, alkoxy, -CN, -CHal₃, -COR (in which R denotes -OH, alkoxy, aryloxy or an amino group), or R₁₈ together with R₁₇ or R₁₉ or R₂₁ together with R₂₀ or R₂₂ mean the residues required to complete a naphthiazole ring system,
wherein R₈, R₉ and M^{⊕} have the meaning stated for formula I.

## Revendications

1. Colorant cyanine de Formule générale (I) : 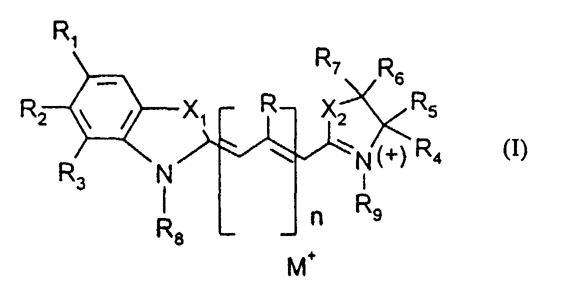 dans laquelle
X₁ et X₂ sont O, S, Se ou NR₁₀ ;
R₁ et R₂ ou R₂ et R₃ sont les chaînons restants d'un groupe phénanthroazole ou anthraazole éventuellement substitué et dont le radical restant R₃ ou R₁ est l'hydrogène ;
R₄ et R₆ sont l'hydrogène ou sont ensemble une liaison π,
R₅ et R₇ sont l'hydrogène, un groupe alkyle ou aryle ou
R₄, R₅, R₆ et R₇ sont les chaînons restants d'un groupe benzazole, naphtazole, phénanthroazole ou anthraazole éventuellement substitué ;
R₈, R₉ sont un groupe alkyle, sulfoalkyle, carboxyalkyle, -(CH₂)ₘ- CO-NR₁₁ - SO₂ - R₁₂ ou -(CH₂)ₘ - SO₂ -NR₁₁ -CO-R₁₂ ;
R₁₀ est un reste tel que R₈/R₉ ou aryle ;
R₁₁ est l'hydrogène ou la charge négative (⊖) restant après le départ d'un proton ;
R₁₂ est un groupe alkyle, aryle, -O^{⊖}, -N(R₁₃)₂ ;
R₁₃ est l'hydrogène, un groupe alkyle ou aryle (identique ou différent) ;
R est l'hydrogène, un groupe alkyle en C₁-C₄ , alkylthio en C₁-C₄ ou phényle ;
m est un nombre entier de 1 à 10 ;
n vaut 0 ou 1 ; et
M⁺ est un cation éventuellement nécessaire pour la neutralisation de la charge ;
sous réserve que le colorant cyanine de Formule I possède au moins un groupe sulfoalkyle, un groupe carboxyalkyle, un groupe -(CH₂)ₘ- CO-NR₁₁ - SO₂ - R₁₂ ou un groupe -(CH₂)ₘ - SO₂ -NR₁₁ -CO-R₁₂.

2. Matériau d'enregistrement photographique avec au moins une couche d'émulsion à l'halogénure d'argent sensible à la lumière, dont l'halogénure d'argent est sensibilisé spectralement avec un colorant cyanine de Formule générale (I) : 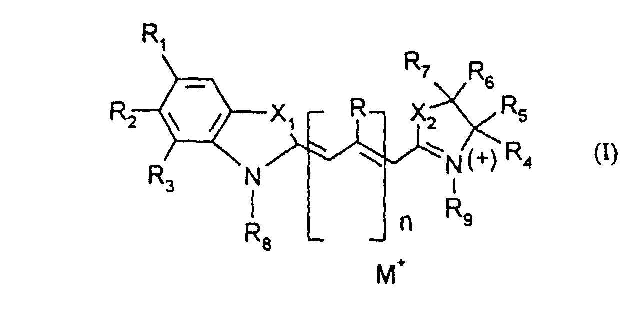 dans laquelle
X₁ et X₂ sont O, S, Se ou NR₁₀ ;
R₁ et R₂ ou R₂ et R₃ sont les chaînons restants d'un groupe phénanthroazole ou anthraazole éventuellement substitué et dont le radical restant R₃ ou R₁ est l'hydrogène ;
R₄ et R₆ sont l'hydrogène ou sont ensemble une liaison π,
R₅ et R₇ sont l'hydrogène, un groupe alkyle ou aryle ou
R₄, R₅, R₆ et R₇ sont les chaînons restants d'un groupe benzazole, naphtazole, phénanthroazole ou anthraazole éventuellement substitué ;
R₈, R₉ sont un groupe alkyle, sulfoalkyle, carboxyalkyle, -(CH₂)ₘ- CO-NR₁₁ - SO₂ - R₁₂ ou -(CH₂)ₘ- SO₂-NR₁₁-CO-R₁₂ ;
R₁₀ est un reste tel que R₈/R₉ ou aryle ;
R₁₁ est l'hydrogène ou la charge négative ⊖ restant après le départ d'un proton ;
R₁₂ est un groupe alkyle, aryle, -O^{⊖}, -N(R₁₃)₂ ;
R₁₃ est l'hydrogène, un groupe alkyle ou aryle (identique ou différent) ;
R est l'hydrogène, un groupe alkyle en C₁-C₄ , alkylthio en C₁-C₄ ou phényle ;
m est un nombre entier de 1 à 10 ;
n vaut 0 ou 1 ; et
M⁺ est un cation éventuellement nécessaire pour la neutralisation de la charge ;
sous réserve que le colorant cyanine de Formule I possède au moins un groupe sulfoalkyle, un groupe carboxyalkyle, un groupe -(CH₂)ₘ- CO-NR₁₁ - SO₂ -R₁₂ ou un groupe -(CH₂)ₘ - SO₂ -NR₁₁ -CO-R₁₂.

3. Matériau d'enregistrement photographique selon la revendication 2, caractérisé en ce que l'halogénure d'argent est sensibilisé spectralement en outre avec un colorant cyanine de Formule générale (II) : 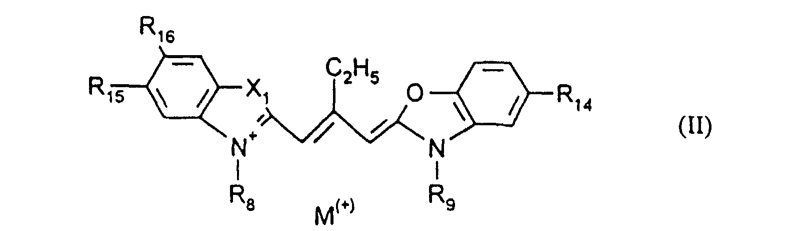 dans laquelle
X₁ est O, S, Se ou 〉NR₈
R₁₄, R₁₅, R₁₆ sont l'hydrogène, un groupe alkyle, aryle, un halogène, un groupe alcoxy, -CN, -CHal₃, -COR (dans lequel R est -OH, un groupe alcoxy, aryloxy ou amino),
R₈, R₉ et M^{⊕} ayant la signification donnée pour la Formule I.

4. Matériau d'enregistrement photographique selon la revendication 2, caractérisé en ce que l'halogénure d'argent est sensibilisé spectralement en outre avec un ou plusieurs colorants cyanine de Formule générale III : 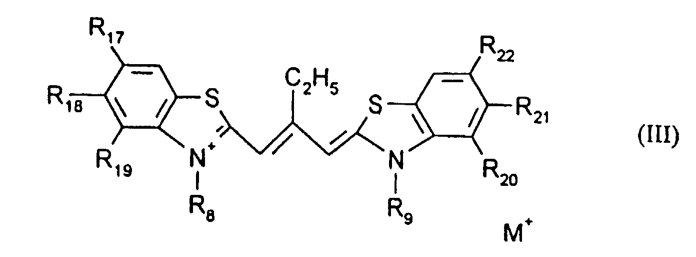 dans laquelle
R₁₇, R₁₈, R₁₉, R₂₀, R₂₁, R₂₂ sont l'hydrogène, un groupe alkyle, aryle, un halogène, un groupe alcoxy, -CN, -CHal₃, -COR (dans lequel R est -OH, un groupe alcoxy, aryloxy ou amino),
ou R₁₈ avec R₁₇ ou R₁₉, respectivement R₂₁, avec R₂₀ ou R₂₂ sont le radical restant pour compléter un système cyclique naphtothiazole,
R₈, R₉ et M^{⊕} ayant la signification donnée pour la Formule I.
